# EUROPÄISCHE PATENTANMELDUNG

(11) **EP 4 357 105 A1**
(43) Veröffentlichungstag der Anmeldung: **24.04.2024**
(21) Anmeldenummer: 23204322.4
(22) Anmeldetag: 18.10.2023
(51) Int. Cl.: B29C 48/13, B29C 48/09, B29C 48/30, B29C 48/25, B29D 23/18

(54) **VORRICHTUNG ZUM HERSTELLEN VON KUNSTSTOFFROHREN**

(30) Priorität: 18.10.2022 DE 102022127261; 03.02.2023 DE 102023102683; 03.02.2023 DE 102023102686; 04.08.2023 DE 102023120768
(71) Anmelder: UNICOR GmbH, 97437 Hassfurt (DE)
(72) Erfinder: KOSSNER, Hubert, 97523 Schwanfeld (DE)
(74) Vertreter: Louis Pöhlau Lohrentz

(57) **Zusammenfassung**

Beschrieben wird eine Vorrichtung zum Herstellen von Kunststoffrohren (10) mit einem Korrugator (1), in den über den Spritzkopf (9s) ein Kunststoffschmelzeschlauch zum Ausformen des Kunststoffrohres eingeleitet wird.

Zur Führung der Formbacken (5) in der ortsfesten Führungseinrichtung weisen die Formbacken an ihrer Oberseite und/oder an ihrer Unterseite Führungsstifte auf. An ihrer Seitenfläche, die von der Formfläche abgewandt ist, weisen die Formbacken jeweils eine Zahnreiheneinrichtung (5z) auf. Diese ist bei bevorzugten Ausführungen als innenliegende Zahnreiheneinrichtung mit einer oder mehreren innenliegenden Zahnreihen ausgebildet.

## Beschreibung

Die Erfindung betrifft eine Vorrichtung zum Herstellen von Kunststoffrohren, vorzugsweise Kunststoffwellrohren nach dem Oberbegriff des Hauptanspruchs 1.

Aus der WO 2017/064 368 A1 und der WO 2017/046 421 A1 sind derart aufgebaute Vorrichtungen bekannt.

Der Erfindung liegt die Aufgabe zugrunde, eine hinsichtlich der Führung der Formbacken verbesserte Vorrichtung zu schaffen.

Erfindungsgemäß wird die Aufgabe mit dem Gegenstand der nebengeordneten Hauptansprüche 1, 2, 3 und 4 gelöst. Hierbei bildet der Gegenstand jedes der vier Hauptansprüche eine erfindungsgemäße Lösung. Zusätzlich bilden die Gegenstände der vier Hauptansprüche optional jedoch auch in Kombination miteinander jeweils Lösungen. Die Hauptansprüche 1 bis 4 sind entsprechend optional aufeinander rückbezogen.

Die vier Hauptansprüche 1 bis 4 weisen jeweils einen identischen Oberbegriff auf. Demnach handelt es sich bei jeder Lösung um eine Vorrichtung zum Herstellen von Kunststoffrohren, vorzugsweise Kunststoffwellrohren mit einem Extruder mit Spritzkopf und einem Korrugator, in den über den Spritzkopf ein Kunststoffschmelzeschlauch zum Ausformen des Kunststoffrohres eingeleitet wird, wobei vorgesehen ist,
- dass der Korrugator eine Formstrecke aufweist, in der Formbacken paarweise in Produktionsrichtung geführt werden,
- dass in einem Einlaufabschnitt des Korrugators die Formbacken zu Formbackenpaaren zum Anfang der Formstrecke zusammengeführt werden,
- dass in einem Auslaufabschnitt des Korrugators die Formbacken der Formbackenpaare vom Ende der Formstrecke auseinander geführt werden,
- dass in einem zwischen dem Einlaufabschnitt und dem Auslaufabschnitt angeordneten Zwischenabschnitt des Korrugators die Formstrecke zur Führung der Formbackenpaare ausgebildet ist und mindestens eine Rückführung ausgebildet ist, in der die Formbacken vom Ende der Formstrecke zum Anfang der Formstrecke rückgeführt werden,
- dass die linken Formbacken in einem linken Formbackenumlauf endlos geführt sind und die rechten Formbacken in einem rechten Formbackenumlauf endlos geführt sind, wobei der linke Formbackenumlauf und der rechte Formbackenumlauf jeweils einen als Umlenkbereich ausgebildeten Einlaufabschnitt, vorzugsweise mit Umlenkritzeleinrichtung, einen linearen Formstreckenabschnitt und einen als Umlenkbereich ausgebildeten Auslaufabschnitt, vorzugsweise mit Umlenkritzeleinrichtung, und einen den Auslaufabschnitt und den Einlaufabschnitt verbindenden Rücklaufabschnitt aufweist,
- dass der Korrugator eine ortsfeste Führungseinrichtung zur Führung der Formbacken aufweist, wobei die ortsfeste Führungseinrichtung durch jeweils eine ortsfeste Führungseinrichtung in den Umlenkbereichen und durch eine ortsfeste Führungseinrichtung in dem Zwischenabschnitt gebildet ist,
- dass jeder Formbacken mindestens zwei Führungsstifte zum Eingriff in eine oder mehrere Führungsnuten der ortsfesten Führungseinrichtung und eine Zahnreiheneinrichtung aufweist,
- dass die mindestens zwei Führungsstifte auf der Oberseite und/oder der Unterseite des Formbackens angeordnet sind und die Zahnreiheneinrichtung an einer Seitenfläche des Formbackens zum Zusammenwirken mit einer Umlenkritzeleinrichtung in den Umlenkbereichen und/oder zum Zusammenwirken mit einer Ritzeleinrichtung im Zwischenabschnitt des Korrugators, vorzugsweise Formstrecke angeordnet ist,
- dass die mindestens zwei Führungsstifte einen ersten Führungsstift und einen zweiten Führungsstift umfassen,
- dass zwischen dem ersten Führungsstift und dem zweiten Führungsstift ein Abstand entlang der Erstreckung des Formbackens in Produktionsrichtung ausgebildet ist, vorzugsweise zur Schwenkbewegung des Formbackens im Umlenkbereich,
- dass der erste Führungsstift und der zweite Führungsstift an derselben Seite des Formbackens angeordnet sind oder an unterschiedlichen Seiten des Formbackens, vorzugsweise an gegenüberliegenden Seiten des Formbackens angeordnet sind.

Die erfindungsgemäße Lösung des Hauptanspruchs 1 sieht in Weiterbildung der Merkmale des Oberbegriffs vor,
(i)
   - dass die Zahnreiheneinrichtung als innenliegende Zahnreiheneinrichtung ausgebildet ist, die durch eine innenliegende Zahnreihe entlang der Produktionsrichtung erstreckend oder mehrere innenliegende Zahnreihen entlang der Produktionsrichtung erstreckend gebildet ist,
      oder
   - dass die Zahnreiheneinrichtung als aufliegende Zahnreiheneinrichtung ausgebildet ist, die durch eine aufliegende Zahnreihe entlang der Produktionsrichtung erstreckend oder mehrere aufliegende Zahnreihen entlang der Produktionsrichtung erstreckend gebildet ist,
   wobei vorgesehen ist,
   dass die Zahnreiheneinrichtung, an der Seitenfläche des Formbacken
   bezüglich der Höhe der Seitenfläche unsymmetrisch verteilt ausgebildet ist, und
(ii) dass die Anzahl der Führungsstifte an der Oberseite des Formbacken unterschiedlich oder gleich ist zu der Anzahl der Führungsstifte an der Unterseite des Formbacken, wobei jeder Formbacken genau zwei Führungsstifte oder genau drei Führungsstifte oder mehr als drei Führungsstifte aufweist.

Die erfindungsgemäße Lösung des Hauptanspruchs 2 sieht in Weiterbildung mit den Merkmalen des Oberbegriffs vor,
(i)
   - dass die Zahnreiheneinrichtung als innenliegende Zahnreiheneinrichtung ausgebildet ist, die durch eine innenliegende Zahnreihe entlang der Produktionsrichtung erstreckend oder mehrere innenliegende Zahnreihen entlang der Produktionsrichtung erstreckend gebildet ist,
      oder
   - dass die Zahnreiheneinrichtung als aufliegende Zahnreiheneinrichtung ausgebildet ist, die durch eine aufliegende Zahnreihe entlang der Produktionsrichtung erstreckend oder mehrere aufliegende Zahnreihen entlang der Produktionsrichtung erstreckend gebildet ist,
   wobei vorgesehen ist,
   dass die Breite der Zahnreihe der Zahnreiheneinrichtung sich quer zur Produktionsrichtung mindestens über ein Drittel der Höhe des Formbackens, vorzugsweise über die Hälfte der Höhe des Formbacken, insbesondere über die gesamte Höhe des Formbacken erstreckt, und
(ii) dass die Anzahl der Führungsstifte an der Oberseite des Formbacken unterschiedlich oder gleich ist zu der Anzahl der Führungsstifte an der Unterseite des Formbacken, wobei jeder Formbacken genau zwei Führungsstifte oder genau drei Führungsstifte oder mehr als drei Führungsstifte aufweist.

Die erfindungsgemäße Lösung des Hauptanspruchs 3 sieht in Weiterbildung der Merkmale des Oberbegriffs vor,
(i)
   - dass die Zahnreiheneinrichtung als innenliegende Zahnreiheneinrichtung ausgebildet ist, die durch eine innenliegende Zahnreihe entlang der Produktionsrichtung erstreckend oder mehrere innenliegende Zahnreihen entlang der Produktionsrichtung erstreckend gebildet ist,
      oder
   - dass die Zahnreiheneinrichtung als aufliegende Zahnreiheneinrichtung ausgebildet ist, die durch eine aufliegende Zahnreihe entlang der Produktionsrichtung erstreckend oder mehrere aufliegende Zahnreihen entlang der Produktionsrichtung erstreckend gebildet ist,
   und
(ii) dass die Anzahl der Führungsstifte an der Oberseite des Formbacken unterschiedlich ist zu der Anzahl der Führungsstifte an der Unterseite des Formbacken, wobei jeder Formbacken genau zwei Führungsstifte oder genau drei Führungsstifte oder mehr als drei Führungsstifte aufweist.

Die erfindungsgemäße Lösung des Hauptanspruchs 4 sieht in Weiterbildung der Merkmale des Oberbegriffs vor,
- dass die Zahnreiheneinrichtung als innenliegende Zahnreiheneinrichtung ausgebildet ist, die durch eine innenliegende Zahnreihe entlang der Produktionsrichtung erstreckend oder mehrere innenliegende Zahnreihen entlang der Produktionsrichtung erstreckend gebildet ist, wobei vorzugsweise vorgesehen ist, dass die Zähne und/oder die Zahnlücken der Zahnreihe jeweils in die Seitenfläche eingreifend, vorzugsweise nicht über die Seitenfläche überstehend ausgebildet sind,
   oder
- dass die Zahnreiheneinrichtung (5z) als aufliegende Zahnreiheneinrichtung ausgebildet ist, die durch eine aufliegende Zahnreihe entlang der Produktionsrichtung erstreckend oder mehrere aufliegende Zahnreihen entlang der Produktionsrichtung erstreckend gebildet ist,
wobei vorzugsweise vorgesehen ist, dass die Zähne und/oder Zahnlücken der Zahnreihe jeweils auf der Seitenfläche aufliegend und über die Seitenfläche überstehend ausgebildet sind.

Bei den Gegenständen der Hauptansprüche 1, 2, 3 und 4 kann, was die Ausgestaltung der innenliegenden Zahnreiheneinrichtung betrifft, vorgesehen sein, dass die Zähne und/oder die Zahnlücken der Zahnreihe jeweils senkrecht zur Seitenfläche gerichtet sind und in die Seitenfläche eingreifend, vorzugsweise nicht über die Seitenfläche überstehend ausgebildet sind.

Bei den Gegenständen der Hauptansprüche 1, 2, 3 und 4 kann, was die Ausgestaltung der aufliegenden Zahnreiheneinrichtung betrifft, vorgesehen sein, dass die Zähne und/oder die Zahnlücken der Zahnreihe jeweils senkrecht zur Seitenfläche gerichtet und auf der Seitenfläche aufliegend und über die Seitenfläche überstehend ausgebildet sind.

Im Folgenden werden Ausführungen der erfindungsgemäßen Lösungen anhand der Unteransprüche beschrieben. Diese Ausführungen stellen jeweils vorteilhafte Weiterbildungen von erfindungsgemäßen Lösungen nach einem oder mehreren der Hauptansprüche dar.

Bevorzugte Ausführungen können vorsehen, dass die Zahnreiheneinrichtung, die nur durch eine Zahnreihe oder mehrere Zahnreihen gebildet ist, an der Seitenfläche des Formbacken bezüglich der Höhe der Seitenfläche unsymmetrisch ausgebildet ist, vorzugsweise indem vorgesehen ist,
- dass die nur eine Zahnreihe nicht ausschließlich mittig, sondern zumindest abschnittsweise überwiegend in der oberen Hälfte oder überwiegend in der unteren Hälfte der Seitenfläche angeordnet ist,
   oder
- dass die Anzahl und/oder die Anordnung der Zahnreihen in der oberen Hälfte der Seitenfläche nicht identisch ist wie die Anzahl und/oder die Anordnung der Zahnreihen in der unteren Hälfte der Seitenfläche.

Alternativ kann vorgesehen sein, dass die Zahnreiheneinrichtung, die nur durch die eine Zahnreihe oder durch die mehreren Zahnreihen gebildet ist, an der Seitenfläche des Formbackens bezüglich der Höhe der Seitenfläche symmetrisch ausgebildet ist, vorzugsweise indem vorgesehen ist,
- dass die nur eine Zahnreihe an der Seitenfläche mittig angeordnet ist, oder
- dass die Anzahl und die Anordnung der Zahnreihen in der oberen Hälfte der Seitenfläche identisch ist wie in der unteren Hälfte der Seitenfläche.

Die unsymmetrischen oder symmetrischen Gestaltungen der Zahnreiheneinrichtungen können abhängig von der konkreten Gestaltung und Anordnung der Formbacken dazu beitragen, den Vorschub der Formbacken und/oder die Wärmeverteilung in den Formbacken und/oder die Fertigung der Formbacken zu optimieren.

Es sind besonders bevorzugte Ausführungen auch möglich, bei denen vorgesehen ist, dass die Breite der Zahnreihe der Zahnreiheneinrichtung sich quer zur Produktionsrichtung mindestens über ein Drittel der Höhe des Formbackens, vorzugsweise über die Hälfte der Höhe des Formbackens, insbesondere über die gesamte Höhe des Formbackens, erstreckt. Abhängig von der Breite der Zahnreiheneinrichtung kann eine Optimierung des Vorschubs der Formbacken, der Wärmeverteilung in den Formbacken und/oder der Fertigung der Formbacken erreicht werden.

Bevorzugte Ausführungen können vorsehen, dass die in dem Umlenkbereich angeordnete Umlenkritzeleinrichtungen jeweils ein einziges Umlenkritzel aufweisen, das mit der einen oder den mehreren Zahnreihen der Zahnreiheneinrichtung des Formbackens kämmt, vorzugsweise nur mit einem Teilabschnitt der Breite der Zahnreiheneinrichtung kämmt,
wobei vorgesehen ist,
dass die Breite der Verzahnung des Umlenkritzels der Breite der Zahnreihe der Zahnreiheneinrichtung entspricht, vorzugsweise identische Breite aufweist, oder dass die Breite der Verzahnung des Umlenkritzels geringer ist, als die Breite der Zahnreihe der Zahnreiheneinrichtung und das Umlenkritzel nur mit einem Teilabschnitt der Breite der Zahnreiheneinrichtung kämmt.

Es sind auch vorteilhafte Ausführungen möglich, die vorsehen, dass die Umlenkritzeleinrichtungen jeweils mehrere Umlenkritzel aufweisen, die vorzugsweise auf einer gemeinsamen Drehwelle drehfest gelagert sind und mit dem einen oder den mehreren Zahnreihen der Zahnreiheneinrichtung des Formbackens kämmen, vorzugsweise vorgesehen ist, dass ein Umlenkritzel jeweils nur mit einem Teilabschnitt der Breite der Zahnreiheneinrichtung kämmt.

Vorteilhafte Ausführungen können eine Spielausgleichseinrichtung aufweisen. Diese Ausführungen können vorsehen, dass eine Spielausgleichsritzeleinrichtung außerhalb des Umlenkbereichs, vorzugsweise in der Formstrecke und/oder in der Rückführung der Formbacken angeordnet ist, und mit der einen oder den mehreren Zahnreihen der Zahnreiheneinrichtung des Formbackens kämmt, vorzugsweise mit nur einem Teilabschnitt der Breite der Zahnritzeleinrichtung kämmt, indem vorzugsweise vorgesehen ist,
dass die Spielausgleichsritzeleinrichtung ein einziges Spielausgleichsritzel aufweist oder mehrere Spielausgleichsritzel, die auf einer gemeinsamen Drehwelle drehfest gelagert sind, aufweist, und das einzige Spielausgleichsritzel oder die mehreren Spielausgleichsritzel mit der gesamten Breite der Zahnreiheneinrichtung oder mit nur einem Teilabschnitt der Breite der Zahnreiheneinrichtung kämmt bzw. kämmen.

Was die Ausgestaltung der Führungsstifte betrifft, können bevorzugte Ausführungen vorsehen, dass die mindestens zwei Führungsstifte
- als mit dem Formbacken bewegungsfeste und/oder starre Führungsstifte ausgebildet sind, oder
- als relativ zu dem Formbacken drehbare Führungsstifte ausgebildet sind. Es kann alternativ oder zusätzlich auch vorgesehen sein, dass mindestens einer der Führungsstifte als mit dem Formbacken bewegungsfester und/oder starrer Führungsstift und mindestens ein anderer der Führungsstifte als relativ zu dem Formbacken drehbarer Führungsstift ausgebildet ist.

Um eine besonders günstige Führung zu erhalten, kann vorgesehen sein, dass der erste Führungsstift und der zweite Führungsstift an der Oberseite des Formbackens angeordnet sind und vorzugsweise vorgesehen ist, dass an der Unterseite des Formbackens kein Führungsstift angeordnet ist oder weniger Führungsstifte als an der Oberseite angeordnet sind und die gesamte Fläche der Unterseite des Formbackens als durchgehende ebene Fläche ausgebildet ist, nur durchbrochen oder reduziert durch den an der Unterseite des Formbackens angeordneten Führungsstift oder die an der Unterseite des Formbackens angeordneten Führungsstifte.

Bevorzugte Ausführungen können vorsehen, dass die ortsfeste Führungseinrichtung in jedem Umlenkbereich mehrere Führungsnuten oder nur eine Führungsnut aufweist, wobei die mehreren Führungssnuten als erste Führungsnut zum Eingriff des ersten Führungsstiftes und als zweite Führungsnut zum Eingriff des zweiten Führungsstiftes ausgebildet sind, oder die nur eine Führungsnut als gemeinsame Führungsnut zum Eingriff des ersten Führungsstiftes und des zweiten Führungsstiftes ausgebildet ist.

Besonders bevorzugte Ausführungen sehen eine Führungs- und/oder Temperierkörpereinrichtung vor, und zwar insbesondere im Bereich des Zwischenabschnitts, d.h. des Abschnitts, der die Formstrecke und die Formbackenrückführung enthält. Es sind Ausführungen möglich, die vorsehen, dass die ortsfeste Führungseinrichtung in den Zwischenabschnitt eine Führungs- und/oder Temperierkörpereinrichtung aufweist, die die passierenden Formbacken zumindest teilweise umgibt und Führungs- und/oder Temperierflächen zur Wärmeübertragung und/oder zur gleitenden Führung der Außenfläche der Formbacken aufweist.

Es kann vorgesehen sein, dass die Führungs- und/oder Temperierkörpereinrichtung mehrere Führungsnuten aufweist, die die Führungsnuten zum Eingriff der Führungsstifte der Formbacken bilden, vorzugsweise als Aufnahmenut, die den oder die Führungsstifte mit Spiel aufnimmt, wobei vorzugsweise vorgesehen ist, dass mindestens eine der Führungsnuten durch einen Zwischenraum zwischen den aneinander liegenden Führungs- und/oder Temperierkörper gebildet wird.

Eine besonders vorteilhafte konstruktive Gestaltung ist mit Ausführungen möglich, die vorsehen, dass die Führungs- und/oder Temperierkörpereinrichtung aus mehreren in Führungsrichtung axial hintereinander auf Stoß angeordneten Temperierkörpern ausgebildet ist und/oder aus mehreren quer zur Führungsrichtung nebeneinander angeordneten Temperierkörpern ausgebildet ist, wobei vorzugsweise vorgesehen ist, dass in dem Temperierkörper ein oder mehrere Temperiermittelkanäle ausgebildet sind, der bzw. die von dem Temperiermittel durchströmt ist bzw. sind.

Bevorzugte Ausführungen können vorsehen, dass die ortsfeste Führungseinrichtung einen geschlossenen Umlauf zur Führung der Formbacken aufweist, indem die Führungsnuten der Führungseinrichtungen in den Umlenkbereichen an die Führungsnuten und/oder Führungs- und Temperierflächen der Führungseinrichtung in dem Zwischenabschnitt anschließen,
wobei vorgesehen ist, dass die Führungsnuten im Zwischenabschnitt breiter als im Umlenkbereich ausgebildet sind, und/oder dass die Führungsnuten im Zwischenabschnitt als Aufnahmenuten ausgebildet sind, die den Führungsstift oder die Führungsstifte mit Spiel aufnehmen.

Bevorzugte Ausführungen weisen in der Formstrecke eine Vakuumeinrichtung auf. Es kann vorgesehen sein, dass die Führungs- und/oder Temperierkörpereinrichtung von einer extern beaufschlagten Vakuumeinrichtung durchgriffen ist, die an eine in den Formbacken ausgebildete Vakuumkanaleinrichtung anschließbar ist, indem an dem Formbacken eine mit der Vakuumkanaleinrichtung verbundene Vakuumanschlusseinrichtung ausgebildet ist, die mit der Vakuumeinrichtung, vorzugsweise über gleitende Anschlussverbindung verbindbar ist,
wobei vorzugsweise vorgesehen ist, dass die Vakuumeinrichtung die Führungs- und/oder Temperierkörpereinrichtung von oben her durchgreift, und die Vakuumanschlusseinrichtung auf der Oberseite der Formbacken ausgebildet ist, oder dass die Vakuumeinrichtung die Führungs- und/oder Temperierkörpereinrichtung von unten her durchgreift, und die Vakuumanschlusseinrichtung auf der Unterseite der Formbacken ausgebildet ist.

Es kann vorgesehen sein, dass bei Anordnung der Vakuumanschlusseinrichtung auf der Oberseite der Formbacken die gesamte Unterseite des Formbackens als durchgehende ebene Fläche, vorzugsweise Lager- und/oder Lauffläche des Formbacken ausgebildet ist, gegebenenfalls nur durchbrochen oder reduziert durch den an der Unterseite des Formbackens angeordneten Führungsstift oder die an der Unterseite des Formbackens angeordneten Führungsstifte, oder dass bei Anordnung der Vakuumanschlusseinrichtung an der Unterseite der Formbacken die gesamte Unterseite des Formbackens als durchgehende ebene Fläche, vorzugsweise als Lager- und/oder Lauffläche des Formbackens ausgebildet ist, gegebenenfalls nur durchbrochen oder reduziert durch die an der Unterseite der Formbacken angeordnete Vakuumanschlusseinrichtung, und gegebenenfalls durchbrochen oder reduziert durch den an der Unterseite des Formbackens angeordneten Führungsstift, oder die an der Unterseite des Formbackens angeordneten Führungsstifte.

Um im Bereich der Führungs- und/oder Temperierkörpereinrichtung ein Zusammenwirken der Formbacken mit einer Zahnritzeleinrichtung zu realisieren, kann vorgesehen sein, dass in der Führungs- und/oder Temperierkörpereinrichtung eine Spalteinrichtung ausgebildet ist zum Durchgriff von einem oder mehreren Zahnritzeln einer Zahnritzeleinrichtung für ein Kämmen mit der einen oder den mehreren Zahnreihen der an der Seitenfläche der Formbacken ausgebildeten Zahnreiheneinrichtung.

Erfindungsgemäß wird die eingangs genannte Aufgabe insbesondere auch mit dem Gegenstand des Hauptanspruchs 4 gelöst.

Bei der erfindungsgemäßen Lösung handelt es sich dabei um eine Vorrichtung, die die Merkmale des Oberbegriffs des Hauptanspruchs 4 aufweist. Wesentlich für die erfindungsgemäße Lösung ist, dass die Zahnreiheneinrichtung als innenliegende Zahnreiheneinrichtung ausgebildet ist, die durch eine innenliegende Zahnreihe oder mehrere innenliegende Zahnreihen gebildet ist, wobei, vorzugsweise vorgesehen ist, dass die Zähne und/oder die Zahnlücken der Zahnreihe jeweils senkrecht zur Seitenfläche gerichtet sind und in die Seitenfläche eingreifend und vorzugsweise nicht über die Seitenfläche überstehend ausgebildet sind, oder dass die Zahnreiheneinrichtung als aufliegende Zahnreiheneinrichtung ausgebildet ist, die durch eine aufliegende Zahnreihe oder mehrere aufliegende Zahnreihen gebildet ist, wobei vorzugsweise vorgesehen ist, dass die Zähne und/oder Zahnlücken der Zahnreihe jeweils senkrecht zur Seitenfläche gerichtet sind und auf der Seitenfläche aufliegend und über die Seitenfläche überstehend ausgebildet sind.

Die Zahnreiheneinrichtung weist eine oder mehrere innenliegende oder aufliegende Zahnreihen auf, die sich an einer Seitenfläche des Formbacken abgewandt zur Formfläche des Formbacken in Längsrichtung des Formbackens, d.h. in Produktionsrichtung erstreckt bzw. erstrecken.

Die Zahnreiheneinrichtung in Verbindung mit der zusammenwirkenden Ritzeleinrichtung, d.h. der Umlenkritzeleinrichtung in den Umlenkbereichen des Korrugators oder einer anderen Ritzeleinrichtung, z.B. in der Formstrecke im Zwischenabschnitt des Korrugators hat bei bevorzugten Ausführungen primär Antriebsfunktion oder Spielausgleichsfunktion in Antriebsrichtung. Sie hat vorzugsweise keine Führungsfunktion in vertikaler Richtung, d.h. sie wirkt nicht zur Aufnahme von vertikalen Kräften.

Bei Ausführungen, bei denen die Zahnreiheneinrichtung als innenliegende Zahnreiheneinrichtung ausgebildet ist und primär Antriebsfunktion oder Spielausgleichsfunktion in Antriebsrichtung hat, greift das Ritzel daher mit oberem und unterem vertikalem Spiel in die Zahnreiheneinrichtung ein.

Die Führung der Formbacken in den Umlenkbereichen erfolgt durch die an den Formbacken ausgebildeten Führungsstiften, die in ortsfeste Führungsnuten im Umlenkbereich eingreifen. Die Führungsstifte wirken dabei nur seitlich, d.h. sie nehmen nur seitliche Kräfte auf. Die Führung der Formbacken in vertikaler Richtung erfolgt über Abstützung der Formbackenunterseite auf einer ortsfesten Führungsfläche, vorzugsweise einer Bodenfläche eines ortsfesten Lager- und/oder Führungsgestells. Eine axiale vertikale Abstützung in den Führungsnuten durch die Führungsstifte erfolgt bei bevorzugten Ausführungen nicht. Die Führungsstifte greifen in die Führungsnuten jeweils mit axialem vertikalem Spiel ein.

Im Zwischenabschnitt des Korrugators ist bei bevorzugten Ausführungen die ortsfeste Führungseinrichtung der Formbacken als Führungs- und/oder Temperierkörpereinrichtung ausgebildet. Die Führung der Formbacken erfolgt dabei zumindest an der Formbackenunterseite und gegebenenfalls an mindestens einer Seitenfläche der Formbacken auf Führungs- und/oder Temperierflächen der Führungs- und/oder Temperierkörpereinrichtungs.

Die Führungsstifte an der Unterseite und der Oberseite der Formbacken greifen bei bevorzugten Ausführungen in entsprechende Aufnahmenuten in den Führungs- und/oder Temperierflächen ein. Die Aufnahmenuten können als Führungsnuten zur Abstützung seitlicher Kräfte ausgebildet sein. Sie können aber auch als Aufnahmenuten mit seitlichem Spiel ausgebildet sein. Bei bevorzugten Ausführungen sind die Aufnahmenuten für die Führungsstifte in der Führungs- und/oder Temperierkörpereinrichtung nur als Aufnahmenuten mit seitlichem Spiel ausgebildet. Die Führung der Formbacken erfolgt in den Führungs- und/oder Temperierkörpereinrichtungen bei den bevorzugten Ausführungen flächig an den Führungs- und/oder Temperierflächen der Führungs- und/oder T em perierkörpereinrichtungen.

Ausführungen, bei denen die Zahnreiheneinrichtung als innenliegende Zahnreiheneinrichtung ausgebildet ist, erfordern in der seitlichen Führungs- und/oder Temperierfläche der Führungs- und/oder Temperierkörper keine Aufnahmenut für die Zahnreiheneinrichtung, da die innenliegende Zahnreiheneinrichtung versenkt, vorzugsweise vollständig versenkt in der Seitenfläche der Formbacken angeordnet ist.

Ausführungen mit aufliegender Zahnreiheneinrichtung erfordern in der seitlichen Führungs- und/oder Temperierungsfläche der Führungs- und/oder Temperierkörpereinrichtung eine Aufnahmenut, die bei bevorzugten Ausführungen mit oberem und unterem vertikalem Spiel ausgebildet ist, so dass die Aufnahmenut keine Führungsfunktion, d.h. keine Abstützung von vertikalen Kräften erbringen muss.

Ausführungen von Formbacken, bei denen die Führungsstifte an der Oberseite des Formbackens angeordnet sind und keine oder nur wenige Führungsstifte an der Unterseite angeordnet sind, sind vorteilhaft für die Führung des Formbackens auf der Formbackenunterseite, da bei diesen Ausführungen die Formbackenunterseite als durchgehende Führungsfläche ausgebildet ist. Entsprechend erfordern diese Formbackenausführungen in der Führungs- und/oder Temperierfläche der Führungs- und/oder Temperierkörpereinrichtung auch keine Aufnahmenut oder eine nur geringe Anzahl an Aufnahmenuten.

Bei speziellen Formbackenausführungen, bei denen die Führungsstifte zumindest an der Unterseite axial federnd ausgebildet sind, ist eine automatische Aus- und Einfahrbarkeit der Führungsstifte möglich, so dass die unteren Führungs- und/oder Temperierflächen der Führungs- und/oder Temperierkörpereinrichtung als durchgehende Flächen ohne Aufnahmenut für die Führungsstifte der Formbacken ausgebildet sein können.

Die Oberseite der Formbacken läuft bei bevorzugten Ausführungen jeweils mit vertikalem Spiel zu der zugewandten oberen Führungs- und/oder Temperierfläche der Führungs- und/oder Temperierkörpereinrichtung. Diese oberen Führungs- und/oder Temperierflächen haben dann also keine Führungsfunktion, sondern sie fungieren lediglich als Temperierflächen.

Was die Ausgestaltung der Zahnreiheneinrichtung betrifft, kann bei bevorzugten Ausführungen vorgesehen sein, dass die Zahnreiheneinrichtung, die nur durch die eine Zahnreihe oder durch die mehreren Zahnreihen gebildet ist, an der Seitenfläche des Formbackens bezüglich der Höhe der Seitenfläche symmetrisch ausgebildet ist, vorzugsweise indem vorgesehen ist, dass die nur eine Zahnreihe an der Seitenfläche mittig angeordnet ist, oder dass die Anzahl und die Anordnung der Zahnreihen in der oberen Hälfte der Seitenfläche identisch ist wie in der unteren Hälfte der Seitenfläche.

Es sind auch vorteilhafte Ausführungen möglich, die vorsehen, dass die Zahnreiheneinrichtung, die nur durch die eine Zahnreihe oder die mehreren Zahnreihen gebildet ist, an der Seitenfläche des Formbacken bezüglich der Höhe der Seitenfläche unsymmetrisch ausgebildet ist, vorzugsweise vorgesehen ist, dass die nur eine Zahnreihe nicht ausschließlich mittig, sondern zumindest abschnittsweise überwiegend in der oberen Hälfte oder überwiegend in der unteren Hälfte der Seitenfläche angeordnet ist, oder dass die Anzahl und/oder die Anordnung der Zahnreihen in der oberen Hälfte der Seitenfläche nicht identisch ist wie die Anzahl und/oder die Anordnung der Zahnreihen in der unteren Hälfte der Seitenfläche.

Was Ausgestaltungen der Zahnreiheneinrichtung betrifft, sehen bevorzugte Ausführungen vor, dass die als innenliegende Zahnreiheneinrichtung ausgebildete Zahnreiheneinrichtung durch eine bezüglich der Höhenerstreckung der Seitenfläche mittig oder nahezu mittig angeordnete innenliegende Zahnreihe gebildet ist, oder dass die als aufliegende Zahnreiheneinrichtung ausgebildete Zahnreiheneinrichtung durch eine bezüglich der Höhenerstreckung der Seitenfläche mittig oder nahezu mittig angeordnete aufliegende Zahnreihe gebildet ist.

Die mittige Ausbildung der Zahnreihe weist hinsichtlich der symmetrischen Krafteinleitung durch das mit der Zahnreihe kämmende Ritzel besondere Vorteile auf.

Es sind auch Ausführungen möglich, die vorsehen, dass die als innenliegende Zahnreiheneinrichtung ausgebildete Zahnreiheneinrichtung durch eine im Bereich der oberen Hälfte der Seitenfläche, vorzugsweise unmittelbar in der oberen Kante des Formbacken, ausgebildete obere innenliegende Zahnreihe und/oder durch eine im Bereich der unteren Hälfte der Seitenfläche, vorzugsweise unmittelbar in der unteren Kante des Formbacken, ausgebildete untere innenliegende Zahnreihe gebildet ist, oder dass die als aufliegende Zahnreiheneinrichtung ausgebildete Zahnreiheneinrichtung durch eine im Bereich der oberen Hälfte der Seitenfläche, vorzugsweise unmittelbar in der oberen Kante des Formbackens, obere aufliegende Zahnreihe und durch eine im Bereich der unteren Hälfte der Seitenfläche, vorzugsweise unmittelbar in der unteren Kante des Formbackens, ausgebildete untere aufliegende Zahnreihe ausgebildet ist, wobei vorgesehen ist, dass die aufliegende Zahnreihe senkrecht von der Seitenfläche auskragt und die Oberseite der aufliegenden Zahnreihe mit der Oberseite des Formbackens und unter die Unterseite der aufliegenden Zahnreihe mit der Unterseite des Formbackens fluchtet.

Vorteilhaft sind auch Ausführungen, die vorsehen, die obere innenliegende Zahnreihe mit Abstand unterhalb des oberen Randes der Seitenfläche und/oder der oberen Kante des Formbackens angeordnet ist, wobei der Abstand vorzugsweise einem Viertel der Höhenerstreckung der Seitenfläche entspricht, und/oder dass die untere innenliegende Zahnreihe mit Abstand oberhalb des unteren Randes der Seitenfläche und/oder der unteren Kante des Formbackens angeordnet ist, wobei der Abstand vorzugsweise einem Viertel der Höhenerstreckung der Seitenfläche entspricht.

In Verbindung mit dem oberen oder unteren Abstand im Bereich des oberen bzw. unteren Randes der Seitenfläche ergeben sich Vorteile bei der Führung und Temperierung der Formbacken an seitlichen Führungs- und oder Temperierflächen, indem vorgesehen ist, dass zwischen dem oberen Rand der Seitenfläche bzw. der oberen Kante des Formbackens und dem oberen Rand der innenliegenden oder aufliegenden Zahnreihe eine ebene Fläche ausgebildet ist, die mit der Ebene der Seitenfläche des Formbackens fluchtet, und/oder dass zwischen dem unteren Rand der innenliegenden oder aufliegenden Zahnreihe und dem unteren Rand der Seitenfläche bzw. der unteren Kante des Formbackens eine ebene Fläche ausgebildet ist, die mit der Ebene der Seitenfläche des Formbackens fluchtet.

Zu einer vorteilhaften Wärmeverteilung in Formbacken mit innenliegender Zahnreiheneinrichtung trägt bei, wenn vorgesehen ist, dass die innenliegende Zahnreihe der als innenliegende Zahnreiheneinrichtung ausgebildeten Zahnreiheneinrichtung eine in die Seitenfläche des Formbackens eingreifende Eingriffstiefe t aufweist und der Formbacken zwischen der Außenseite der Seitenfläche des Formbackens und der Formfläche des Formbackens im Bereich der geringsten Wandstärke des Formbackens eine Mindestwanddicke d aufweist, wobei gilt: d - t ≥ t.

Die an der Seitenfläche der Formbacken ausgebildete Zahnreiheneinrichtung steht in Wechselwirkung mit den an der Oberseite und/oder an der Unterseite der Formbacken ausgebildeten Führungsstiften hinsichtlich Führung und Temperierung der Formbacken und hinsichtlich Krafteinleitung in die Formbacken durch die Ritzeleinrichtung. Besondere Vorteile ergeben sich jeweils bei Ausführungen mit symmetrischer Krafteinleitung durch die Ritzeleinrichtung und mit seitlicher Führung durch die an der Oberseite und/oder an der Unterseite der Formbacken angeordneten Führungsstifte und mit vertikaler Führung über die Unterseite der Formbacken mit ausreichend großer, möglichst durchgehender Führungsfläche an der Formbackenunterseite. Vorzugsweise sind alle Führungsstifte oder die Mehrzahl der Führungsstifte an der Oberseite der Formbacken angeordnet.

Besondere Vorteile ergeben sich mit Ausführungen, die vorsehen, dass der erste Führungsstift und der zweite Führungsstift in einer parallel zur Seitenfläche des Formbackens gemeinsamen Ebene miteinander fluchend angeordnet sind. Es sind auch Ausführungen möglich, bei denen der erste Führungsstift und der zweite Führungsstift quer zur Produktionsrichtung auf den Formbacken zueinander versetzt angeordnet sind.

Was die Ausgestaltung der Führungsstifte betrifft, sind vorteilhafte Ausführungen möglich, die vorsehen, dass die mindestens zwei Führungsstifte als mit dem Formbacken bewegungsfeste und/oder starre Führungsstifte ausgebildet sind oder als relativ zu dem Formbacken drehbare Führungsstifte ausgebildet sind, oder dass mindestens einer der Führungsstifte als mit dem Formbacken bewegungsfester und/oder starrer Führungsstift und mindestens ein anderer der Führungsstifte als relativ zu dem Formbacken drehbarer Führungsstift ausgebildet ist.

Besonders bevorzugte Ausführungen sehen vor, dass der erste Führungsstift und der zweite Führungsstift an der Oberseite des Formbackens angeordnet sind und vorzugsweise vorgesehen ist, dass an der Unterseite des Formbackens kein Führungsstift angeordnet ist oder weniger Führungsstifte als an der Oberseite angeordnet sind und die gesamte Fläche der Unterseite des Formbackens als durchgehende ebene Fläche ausgebildet ist gegebenenfalls nur durchbrechen oder reduziert durch den oder die an der Unterseite der Formbacken angeordneten Führungsstift oder Führungsstifte.

Was die ortsfeste Führungseinrichtung in den Umlenkbereichen betrifft, kann besonders vorteilhaft vorgesehen sein, dass die ortsfeste Führungseinrichtung in jedem Umlenkbereich mehrere Führungsnuten oder nur eine Führungsnut aufweist, wobei die mehreren Führungsnuten als erste Führungsnut zum Eingriff des ersten Führungsstiftes und als zweite Führungsnut zum Eingriff des zweiten Führungsstiftes ausgebildet sind, oder die nur eine Führungsnut als gemeinsame Führungsnut zum Eingriff des ersten Führungsstiftes und des zweiten Führungsstiftes ausgebildet ist. Besondere Vorteile ergeben sich bei Ausführungen, bei denen die Formbacken nur einen Führungsstift an der Oberseite und nur einen Führungsstift an der Unterseite aufweisen und der obere Führungsstift in einer oberen Führungsnut und der untere Führungsstift in einer unteren Führungsnut geführt ist. Es sind in diesem Zusammenhang besondere Ausführungen möglich, bei denen die Führungsnuten unterschiedliche Geometrien aufweisen. Damit kann im Umlenkbereich ein Schwenken der Formbacken erreicht werden, vorzugsweise um eine Schwenkachse, die durch den Formbacken läuft. Insbesondere in Verbindung mit einem Umlenkritzel, das mit der Zahnreiheneinrichtung auf der Seitenfläche der Formbacken kämmt, kann die Schwenkbewegung unterstützt werden. Alternativ sind Ausführungen möglich, bei denen die Führungsnut des oberen Führungsstiftes und die Führungsnut des unteren Führungsstiftes im Umlenkbereich identisch ausgebildet ist, insbesondere identisch kreisförmig, d.h. kreisbogenförmig ausgebildet. Auch bei diesen Ausführungen kann ein Umlenkritzel im Umlenkbereich mit der Verzahnung auf der Seitenfläche der Formbacken kämmen. Die Formbacken können bei diesen Ausführungen sehr eng aufeinanderfolgend, vorzugsweise auch in schiebendem Kontakt laufen.

In bevorzugter Weiterbildung kann vorgesehen sein, dass die ortsfeste Führungseinrichtung in jedem Umlenkbereich eine Gestelleinrichtung und/oder eine Bodenplatteneinrichtung und/oder eine Deckenplatteneinrichtung aufweist, in der die mehreren Führungsnuten bzw. die nur eine Führungsnut zur Führung der Führungsstifte angeordnet sind bzw. ist und vorzugsweise eine Führungsflächeneinrichtung zur gleitenden Führung der Unterseite der Formbacken aufweist.

In diesem Zusammenhang kann auch vorgesehen sein, dass in der Gestelleinrichtung und/oder der Bodenplatteneinrichtung und/oder in der Deckenplatteneinrichtung die Umlenkritzeleinrichtung gelagert ist.

Was die Umlenkritzeleinrichtung betrifft, kann bei bevorzugten Ausführungen vorgesehen sein, dass die in dem Umlenkbereich angeordnete Umlenkritzeleinrichtungen jeweils ein einziges Umlenkritzel aufweisen, das mit der einen oder den mehreren Zahnreihen der Zahnreiheneinrichtung des Formbackens kämmt, vorzugsweise nur mit einem Teilabschnitt der Breite der Zahnreiheneinrichtung kämmt.

Es kann auch vorgesehen sein, dass die Umlenkritzeleinrichtungen jeweils mehrere Umlenkritzel aufweisen, die auf einer gemeinsamen Drehwelle drehfest gelagert sind und mit dem einen oder den mehreren Zahnreihen der Zahnreiheneinrichtung des Formbackens kämmen, vorzugsweise nur mit einem Teilabschnitt der Breite der Zahnreiheneinrichtung kämmt.
Vorzugsweise sind die Umlenkritzeleinrichtungen motorisch angetrieben, d.h. mindestens eine im linken Formbackenumlauf und mindestens eine im rechten Formbackenum lauf.

Bevorzugte Ausführungen weisen Spielausgleichsritzeleinrichtungen auf. Es kann vorgesehen sein, dass eine Spielausgleichsritzeleinrichtung außerhalb des Umlenkbereichs, vorzugsweise in der Formstrecke und/oder in der Rückführung der Formbacken angeordnet ist, und mit der einen oder den mehreren Zahnreihen der Zahnreiheneinrichtung des Formbackens kämmt, vorzugsweise mit nur einem Teilabschnitt der Breite der Zahnritzeleinrichtung kämmt, indem vorzugsweise vorgesehen ist, dass die Spielausgleichsritzeleinrichtung ein einziges Spielausgleichsritzel aufweist oder mehrere Spielausgleichsritzel, die auf einer gemeinsamen Drehwelle drehfest gelagert sind, aufweist, und das einzige Spielausgleichsritzel oder die mehreren Spielausgleichsritzel mit der gesamten Breite der Zahnreiheneinrichtung oder mit nur einem Teilabschnitt der Breite der Zahnreiheneinrichtung kämmt bzw. kämmen.

Besonders bevorzugte Ausführungen sehen vor, dass die ortsfeste Führungseinrichtung in den Zwischenabschnitt eine Führungs- und/oder Temperierkörpereinrichtung aufweist, die die passierenden Formbacken zumindest teilweise umgibt und Führungs- und/oder Temperierflächen zur Wärmeübertragung und/oder zur gleitenden Führung der Außenfläche der Formbacken aufweist.

In bevorzugter Weiterbildung kann vorgesehen sein, dass die Führungs- und/oder Temperierkörpereinrichtung mehrere Führungsnuten aufweist, die die Führungsnuten zum Eingriff der Führungsstifte der Formbacken bilden, vorzugsweise als Aufnahmenut, die den oder die Führungsstifte mit Spiel aufnimmt, wobei vorzugsweise vorgesehen ist, dass mindestens eine der Führungsnuten durch einen Zwischenraum zwischen den aneinander liegenden Führungs- und/oder Temperierkörpern gebildet wird.

Vorteilhaft hinsichtlich des konstruktiven Aufbaus sind Ausführungen, die vorsehen, dass die Führungs- und/oder Temperierkörpereinrichtung aus mehreren in Führungsrichtung axial hintereinander auf Stoß angeordneten Temperierkörpern ausgebildet ist und/oder aus mehreren quer zur Führungsrichtung nebeneinander angeordneten Temperierkörpern ausgebildet ist, wobei vorzugsweise vorgesehen ist, dass in dem Temperierkörper ein oder mehrere Temperiermittelkanäle ausgebildet sind, der bzw. die von einem Temperiermittel durchströmt ist bzw. sind.

Spezielle Ausführungen können vorsehen, dass einer oder mehrere der Führungsstifte axial federnd zum Ein- und/oder Ausfahren in bzw. aus dem Formbacken ausgebildet ist bzw. sind, wobei vorzugsweise vorgesehen ist, dass der Führungsstift in der Führungs- und/oder Temperierkörpereinrichtung durch Zusammenwirken mit der zugeordneten Führungs- und/oder Temperierfläche automatisch ein- und/oder ausfahrbar ist.

Grundsätzlich sind Ausführungen sehr vorteilhaft, die vorsehen, dass die ortsfeste Führungseinrichtung einen geschlossenen Umlauf zur Führung der Formbacken aufweist, indem die Führungsnuten der Führungseinrichtung in den Umlenkbereichen an die Führungsnuten und/oder Führungs- und/oder Temperierflächen der Führungseinrichtung in dem Zwischenabschnitt anschließen, wobei vorgesehen ist, dass die Führungsnuten im Zwischenabschnitt breiter als im Umlenkbereich ausgebildet sind, und/oder dass die Führungsnuten im Zwischenabschnitt als Aufnahmenuten ausgebildet sind, die den Führungsstift oder die Führungsstifte mit Spiel aufnehmen.

Besonders bevorzugte Ausführungen weisen eine Vakuumbeaufschlagung der Formflächen in der Formstrecke auf. Es kann vorgesehen sein, dass die Führungs- und/oder Temperierkörpereinrichtung von einer extern beaufschlagten Vakuumeinrichtung durchgriffen ist, die an eine in den Formbacken ausgebildete Vakuumkanaleinrichtung anschließbar ist, indem an dem Formbacken eine mit der Vakuumkanaleinrichtung verbundene Vakuumanschlusseinrichtung ausgebildet ist, die mit der Vakuumeinrichtung, vorzugsweise über gleitende Anschlussverbindung verbindbar ist, wobei vorzugsweise vorgesehen ist, dass die Vakuumeinrichtung die Führungs- und/oder Temperierkörpereinrichtung von oben her durchgreift, und die Vakuumanschlusseinrichtung auf der Oberseite der Formbacken ausgebildet ist, oder dass die Vakuumeinrichtung die Führungs- und/oder Temperierkörpereinrichtung von unten her durchgreift, und die Vakuumanschlusseinrichtung auf der Unterseite der Formbacken ausgebildet ist.

In Verbindung mit der Vakuumbeaufschlagung kann vorgesehen sein, dass bei Anordnung der Vakuumanschlusseinrichtung auf der Oberseite der Formbacken die gesamte Unterseite des Formbackens als durchgehende ebene Fläche, vorzugsweise Lager- und/oder Lauffläche des Formbacken ausgebildet ist, gegebenenfalls nur durchbrochen oder reduziert durch den an der Unterseite des Formbackens angeordneten Führungsstift oder die an der Unterseite des Formbackens angeordneten Führungsstifte, oder dass bei Anordnung der Vakuumanschlusseinrichtung an der Unterseite der Formbacken die gesamte Unterseite des Formbackens als durchgehende ebene Fläche, vorzugsweise als Lager- und/oder Lauffläche des Formbackens ausgebildet ist, gegebenenfalls nur durchbrochen oder reduziert durch die an der Unterseite der Formbacken angeordnete Vakuumanschlusseinrichtung, und gegebenenfalls durchbrochen oder reduziert durch den an der Unterseite des Formbackens angeordneten Führungsstifts, oder die an der Unterseite des Formbackens angeordneten Führungsstifte.

In Verbindung mit Zahnritzeleinrichtungen kann bei bevorzugten Ausführungen vorgesehen sein, dass in der Führungs- und/oder Temperierkörpereinrichtung eine Spalteinrichtung ausgebildet ist zum Durchgriff von einem oder mehreren Zahnritzeln einer Zahnritzeleinrichtung für ein Kämmen mit der einen oder den mehreren Zahnreihen der an der Seitenfläche der Formbacken ausgebildeten Zahnreiheneinrichtung.

Bei diesen Ausführungen kann vorgesehen sein, dass die Zahnritzeleinrichtung als die Zahnritzeleinrichtung der Umlenkritzeleinrichtung oder als die Zahnritzeleinrichtung der Spielausgleichsritzeleinrichtung ausgebildet ist.

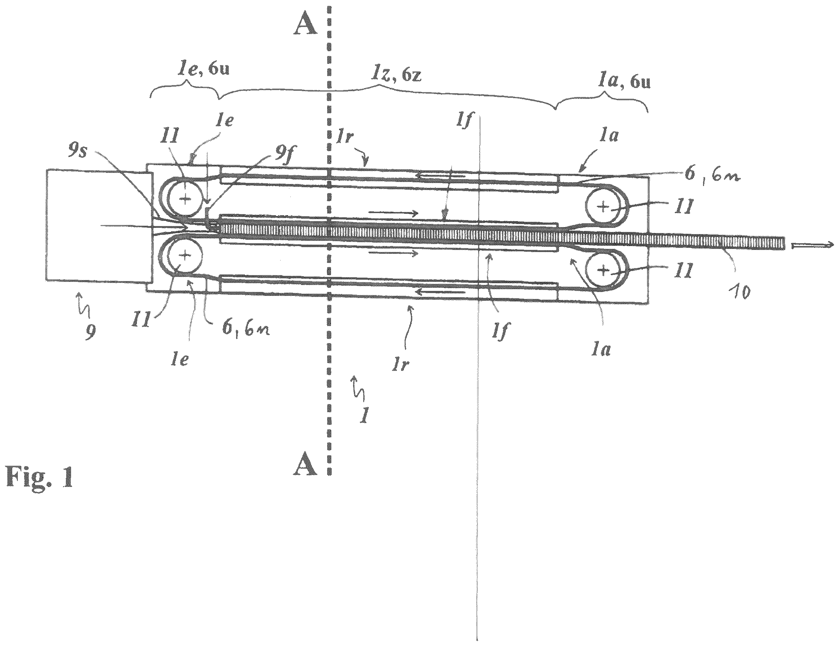

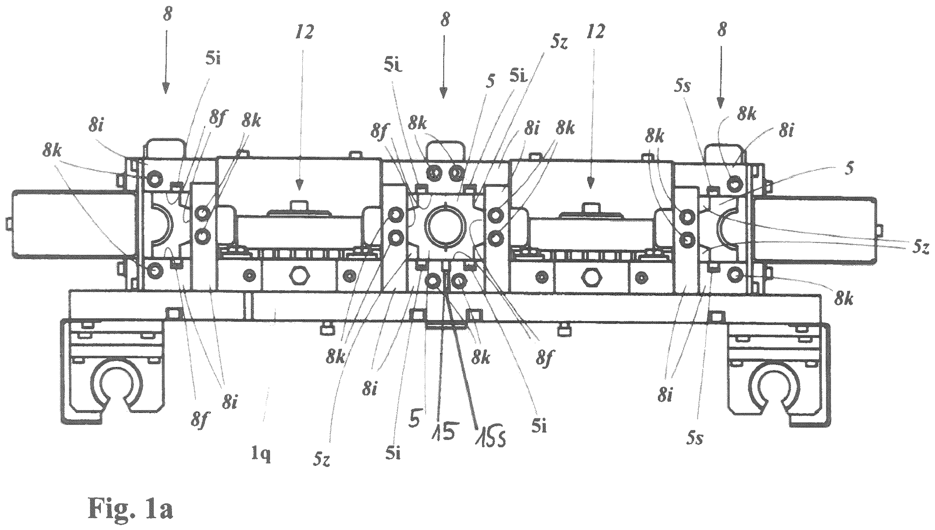

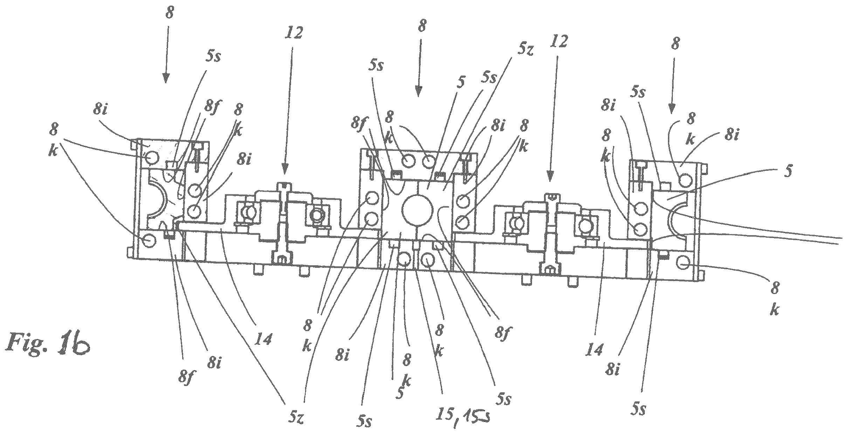

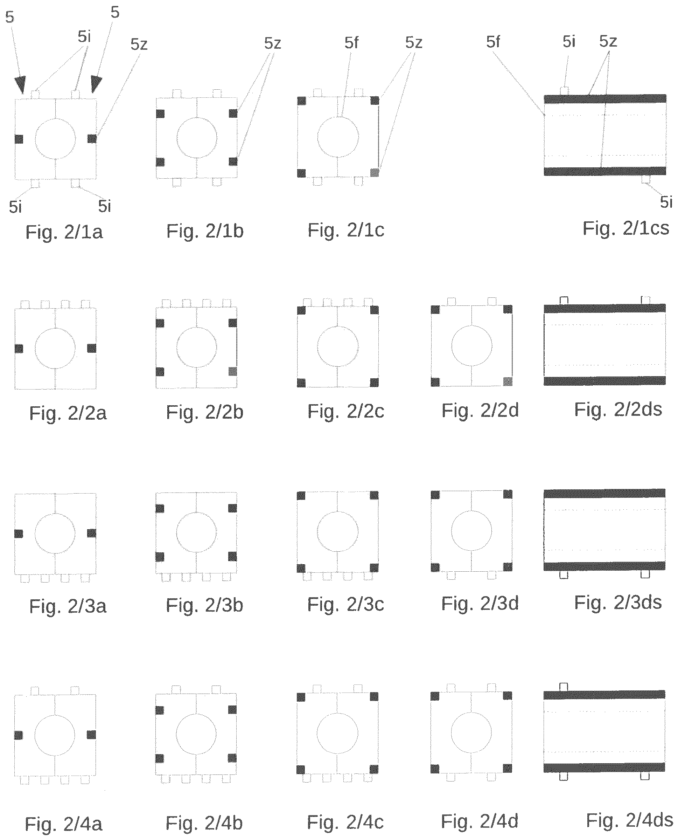

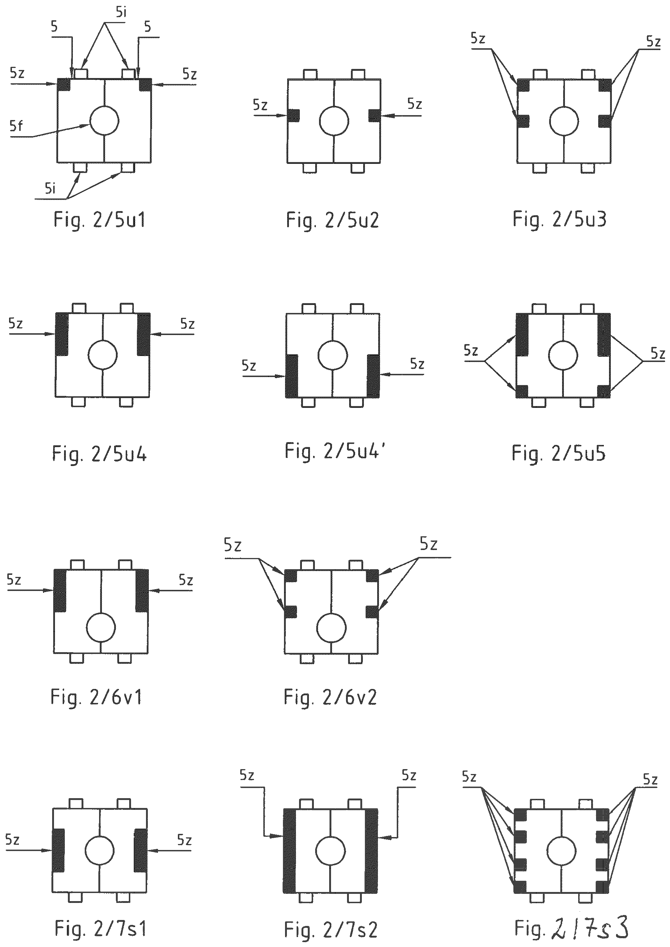

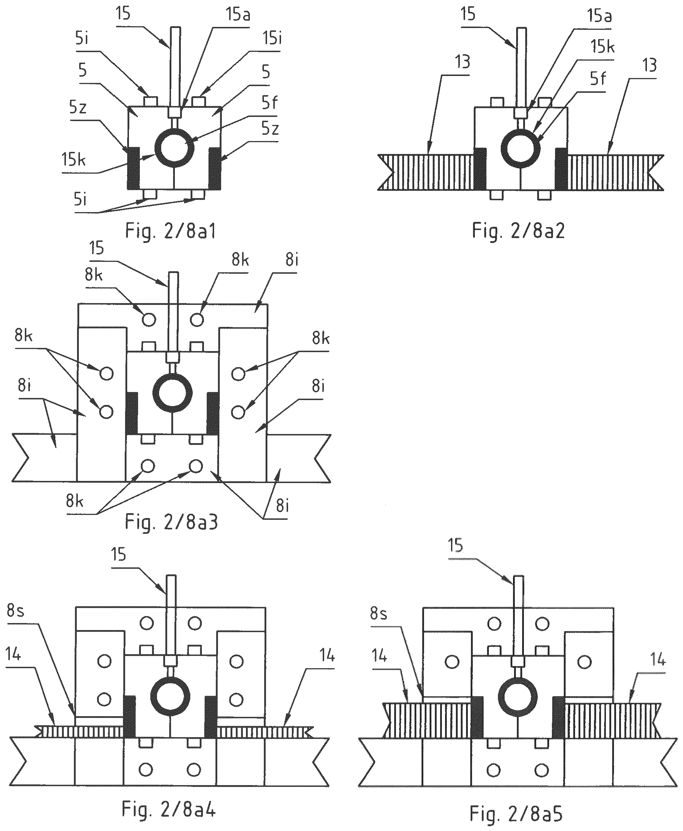

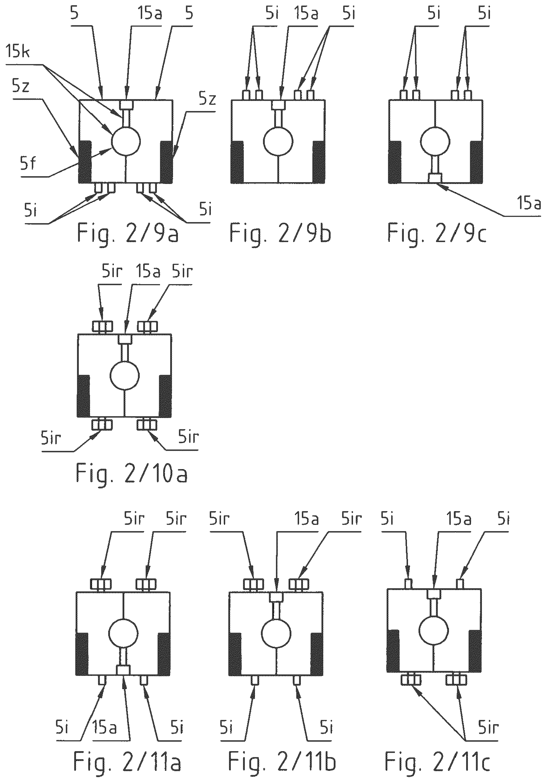

Die Erfindung wird im Folgenden anhand von Ausführungsbeispielen in Verbindung mit Figuren beschrieben, dabei zeigen
- Fig. 1: ein Ausführungsbeispiel einer Vorrichtung zum Herstellen von Kunststoffrohren;
- Fig. 1a: die Vorrichtung in Fig. 1, Schnittdarstellung entlang Line A - A in Fig. 1, die Führungs- und/oder Temperierkörpereinrichtung im Zwischenabschnitt des Korrugators zeigend;
- Fig. 1b: eine Fig. 1a entsprechende Schnittdarstellung, die Führungs- und/oder Temperierkörpereinrichtung im Zwischenabschnitt des Korrugators in Fig. 1 im Bereich der Spielausgleichsritzeleinrichtungen zeigend;
- Fig. 2: Ausführungen von paarweise angeordneten Formbacken mit Führungsstiften an der Oberseite und/oder Unterseite und mit innenliegender Zahnreiheneinrichtung an der Seitenfläche,
- wobei in den Figuren 2/1a, 2/1b und 2/1c jeder Formbacken einen Führungsstift an der Oberseite und einen Führungsstift an der Unterseite und eine variierte Zahnreiheneinrichtung an der Seitenfläche aufweist;
- wobei in den Figuren 2/2a, 2/2b, 2/2c und 2/2d jeder Formbacken zwei Führungsstifte nur an der Oberseite und eine variierte Zahnreiheneinrichtung an der Seitenfläche aufweist;
- wobei in den Figuren 2/3a, 2/3b, 2/3c und 2/3d jeder Formbacken zwei Führungsstifte nur an der Unterseite und eine variierte Zahnreiheneinrichtung an der Seitenfläche aufweist;
- wobei in den Figuren 2/4a, 2/4b, 2/4c und 2/4d jeder Formbacken einen Führungsstift an der Oberseite und zwei Führungsstifte an der Unterseite und eine variierte Zahnreiheneinrichtung an der Seitenfläche aufweist;
- wobei in den Figuren 2/5u1, 2/5u2, 2/5u3, 2/5u4, 2/5u4' und 2/5u5 jeder Formbacken einen Führungsstift an der Oberseite und einen Führungsstift an der Unterseite und eine Zahnreiheneinrichtung an der Seitenfläche aufweist und dabei aber die Zahnreiheneinrichtung im Unterschied zu den vorangehenden Figuren 2/1 bis 2/4 unsymmetrisch über die Höhe der Seitenfläche ausgebildet ist und bei den Formbacken der Figuren variiert ist;
- wobei in den Figuren 2/6v1 und 2/6v2 jeder Formbacken einen Führungsstift an der Oberseite und einen Führungsstift an der Unterseite und eine Zahnreiheneinrichtung an der Seitenfläche aufweist, die Zahnreiheneinrichtung unsymmetrisch über die Höhe der Seitenfläche ausgebildet ist und bei den Formbacken der Figuren variiert ist, dabei aber im Unterschied zu den vorangehenden Figuren die Formflächen in den Formbackenpaaren exzentrisch, und zwar nach unten entlang der Höhe der Formbacken versetzt ist;
- wobei in den Figuren 2/7s1, 2/7s2 und 2/7s3 jeder Formbacken einen Führungsstift an der Oberseite und einen Führungsstift an der Unterseite und eine Zahnreiheneinrichtung an der Seitenfläche aufweist, dabei die Zahnreiheneinrichtung symmetrisch über die Höhe der Seitenfläche ausgebildet ist und die Zahnreiheneinrichtung bei den Formbacken der Figuren hinsichtlich der Anzahl der Zahnreihen und der Breite der Zahnreihen variiert ist;
- wobei in den Figuren 2/8a1, 2/8a2, 2/8a3, 2/8a4 und 2/8a5 jeder Formbacken der Variante aus Figur 2/5u4` entspricht und dabei aber eine in die Formbacken von oben her eingreifende Vakuumeinrichtung 15 aufweist mit oberer Vakuumanschlusseinrichtung 15a und einer Vakuumkanaleinrichtung 15k, die die Formflächen 5f vom linken Formbacken und vom rechten Formbacken her umgibt;
- wobei in den Figuren 2/9a, 2/9b und 2/9c die Formbacken ebenfalls der Variante aus Figur 2/5u4` entsprechen, dabei aber in Fig. 2/9a zwei Führungsstifte der Formbacken jeweils an der Unterseite der Formbacken angeordnet sind und in den Figuren 2/9b und 2/9c die zwei Führungsstifte an der Oberseite der Formbacken angeordnet sind und die Formbacken in den Figuren 2/9a, 2/9b und 2/9c Vakuumeinrichtungen aufweisen, und zwar bei den Ausführungen in Figur 2/9a und 2/9b die Vakuumeinrichtung jeweils von oben her eingreifend mit oben angeordneter Anschlusseinrichtung und bei der Ausführung in Figur 2/9c die Vakuumeinrichtung von unten her eingreifend mit unten angeordneter Anschlusseinrichtung;
- wobei in Fig. 2/10a die Formbacken anstelle von jeweils zwei starr mit den Formbacken verbundenen Führungsstiften zwei Führungsrollen, und zwar jeweils eine Führungsrolle 5ir an der Oberseite und eine Führungsrolle 5ir an der Unterseite angeordnet ist und die Vakuumeinrichtung von oben her eingreifend ausgebildet ist;
- wobei in den Figuren 2/11a, 2/11b und 2/11c Formbacken gezeigt sind, bei denen in den Formbacken jeweils eine Führungsrolle 5ir und ein Führungsstift 5i angeordnet ist, und zwar in Figur 2/11a und 2/11b jeweils ein Führungsstift an der Unterseite und eine Führungsrolle an der Oberseite und in Figur 2/11c umgekehrt, d.h. eine Führungsrolle an der Unterseite und ein Führungsstift an der Oberseite ausgebildet ist. Die Ausführungen in den Figuren 2/11 weisen jeweils alle eine Vakuumeinrichtung 15 auf, in Figur 2/11a ist die Vakuumeinrichtung von unten her eingreifend, in den Figuren 2/11b und 2/11c ist die Vakuumeinrichtung von oben her eingreifend.
   Bei sämtlichen Ausführungen der Figuren 2/8, 2/9, 2/10 und 2/11 sind die Formbacken hinsichtlich der Zahnreiheneinrichtung 5z auf der Seitenfläche der Formbacken und hinsichtlich der zentralen Lage der Formflächen 5f jeweils wie bei der Variante aus Figur 2/5u4` ausgebildet.

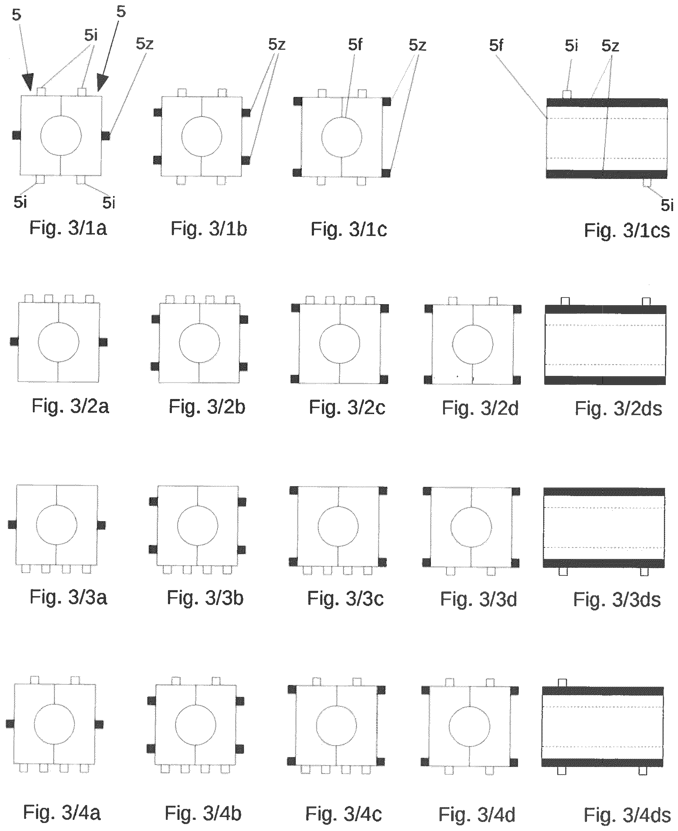

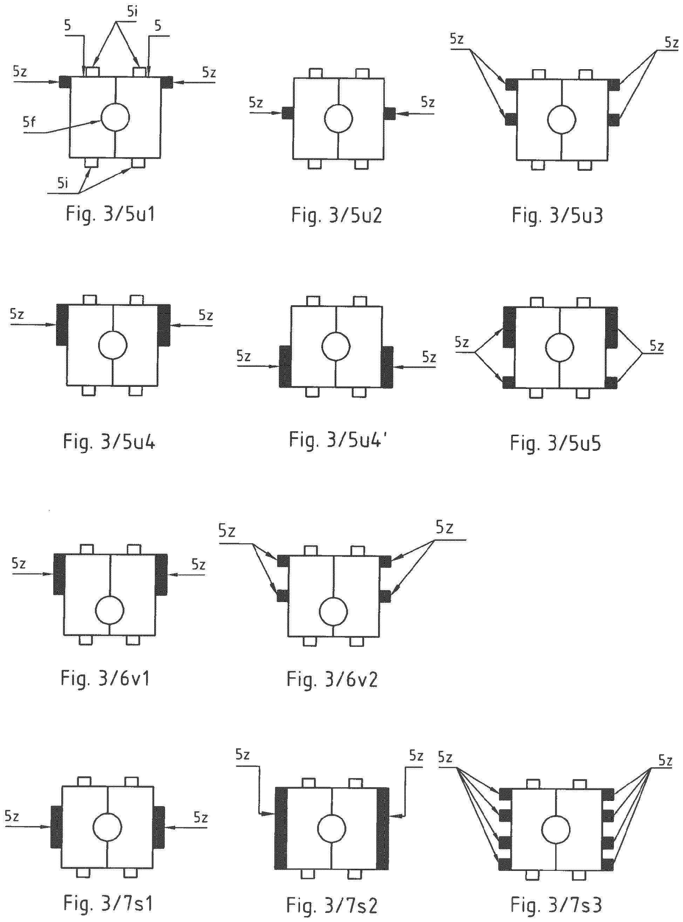

- Fig. 3: Ausführungen von paarweise angeordneten Formbacken mit Führungsstiften an der Oberseite und/oder Unterseite und mit aufliegender Zahnreiheneinrichtung an der Seitenfläche,
- wobei in den Figuren 3/1a, 3/1b und 3/1c jeder Formbacken einen Führungsstift an der Oberseite und einen Führungsstift an der Unterseite und eine variierte Zahnreiheneinrichtung an der Seitenfläche aufweist;
- wobei in den Figuren 3/2a, 3/2b, 3/2c und 3/2d jeder Formbacken zwei Führungsstifte nur an der Oberseite und eine variierte Zahnreiheneinrichtung an der Seitenfläche aufweist;
- wobei in den Figuren 3/3a, 3/3b, 3/3c und 3/3d jeder Formbacken zwei Führungsstifte nur an der Unterseite und eine variierte Zahnreiheneinrichtung an der Seitenfläche aufweist;
- wobei in den Figuren 3/4a, 3/4b, 3/4c und 3/4d jeder Formbacken einen Führungsstift an der Oberseite und zwei Führungsstifte an der Unterseite und eine variierte Zahnreiheneinrichtung an der Seitenfläche aufweist;
- wobei in den Figuren 3/5u1, 3/5u2, 3/5u3, 3/5u4, 3/5u4' und 3/5u5 jeder Formbacken einen Führungsstift an der Oberseite und einen Führungsstift an der Unterseite und eine aufliegende Zahnreiheneinrichtung an der Seitenfläche aufweist und dabei aber die Zahnreiheneinrichtung unsymmetrisch über die Höhe der Seitenfläche ausgebildet ist und bei den Formbacken der Figuren variiert ist;
- wobei in den Figuren 3/6v1 und 3/6v2 jeder Formbacken einen Führungsstift an der Oberseite und einen Führungsstift an der Unterseite und eine Zahnreiheneinrichtung an der Seitenfläche aufweist, die Zahnreiheneinrichtung aufliegend ausgebildet über die Höhe der Seitenfläche ausgebildet ist und bei den Formbacken der Figuren variiert ist, dabei aber die Formfläche in den Formbacken exzentrisch, und zwar entlang der Höhe der Formbacken versetzt ist;
- wobei in den Figuren 3/7s1, 3/7s2 und 3/7s3 jeder Formbacken einen Führungsstift an der Oberseite und einen Führungsstift an der Unterseite und eine Zahnreiheneinrichtung an der Seitenfläche aufweist, dabei die Zahnreiheneinrichtung symmetrisch über die Höhe der Seitenfläche ausgebildet ist und die Zahnreiheneinrichtung bei den Formbacken der Figuren hinsichtlich der Anzahl der Zahnreihen und/oder der Breite der Zahnreihen variiert ist.

Bei dem dargestellten Ausführungsbeispiel handelt es sich um eine Vorrichtung zum Herstellen von Kunststoffrohren. Sie umfasst einen Extruder 9 mit Spritzkopf 9s und einen Korrugator 1.

In den Korrugator 1 wird über den Spritzkopf 9s ein Kunststoffschmelzeschlauch zum Ausformen eines Kunststoffrohrs 10 eingeleitet.

Der Korrugator 1 arbeitet mit linken und rechten Formbacken 5. Erweist eine lineare Formstrecke 1f auf, in der die linken und die rechten Formbacken 5 als Formbackenpaare in Produktionsrichtung geführt werden.

In einem linken und einem rechten Einlaufabschnitt 1e des Korrugators werden die linken und die rechten Formbacken 5 zum Anfang der Formstrecke 1f zu Formbackenpaare zusammengeführt.

In einem linken und einem rechten Auslaufabschnitt 1a des Korrugators werden die linken und die rechten Formbacken 5 der Formbackenpaare vom Ende der Formstrecke 1f auseinander geführt.

Die Formstrecke 1f ist in einem zwischen dem Einlaufabschnitt 1e und dem Auslaufabschnitt 1a angeordneten Zwischenabschnitt 1z des Korrugators ausgebildet. Ferner ist in dem Zwischenabschnitt 1z beidseitig der Formstrecke 1f jeweils eine Rückführung 1r ausgebildet, nämlich eine Rückführung 1r für die linken Formbacken 5 und eine Rückführung 1r für die rechten Formbacken 5. In diesen Rückführungen 1r werden die linken bzw. die rechten Formbacken 5 vom Ende der Formstrecke 1f zum Anfang der Formstrecke 1f rückgeführt.

Die in der Formstrecke 1f hintereinander angeordneten Formbackenpaare liegen in der Formstrecke 1f stirnseitig aufeinander auf Stoß. Ein Formbackenpaar umfasst jeweils zwei spiegelbildlich ausgebildete Formbacken 5, nämlich einen linken und einen rechten Formbacken 5, deren Formflächen 5f die Negativform für das in der Vorrichtung ausgebildete Kunststoffrohr 10 bilden. Zur Ausbildung von Kunststoffwellrohren sind die Formflächen 5f wellenförmig. Die Formflächen 5f der in der Formstrecke 1f auf Stoß angeordneten Formbackenpaare bilden einen durchgehenden Formkanal.

Die linken Formbacken und die rechten Formbacken 5 werden jeweils in einem in sich geschlossenen Formbackenumlauf endlos umgeführt. In dem linken Formbackenumlauf werden die linken Formbacken und im rechten Formbackenumlauf die rechten Formbacken geführt.

Die beiden Formbackenumläufe weisen jeweils im wesentlichen elliptische Form auf. Jeder Formbackenumlauf besteht aus einem geraden Abschnitt, der den Formstreckenabschnitt 1f bildet, einem in dem Formstreckenabschnitt hineinführenden Abschnitt, der den Einlaufabschnitt 1e bildet und einem aus dem Formstreckenabschnitt herausführenden Abschnitt, der den Auslaufabschnitt 1a bildet, sowie einem vorzugsweise geraden rückführenden Abschnitt, der die Rückführung 1r bildet und die Verbindung zwischen dem Auslaufabschnitt 1a und dem Einlaufabschnitt 1e darstellt.

Der Einlaufabschnitt 1e und der Auslaufabschnitt 1a sind jeweils Umlenkbereiche, in denen Umlenkritzel 11 angeordnet sind, die mit Zahnreiheneinrichtungen 5z der in den Umlenkbereichen geführten Formbacken zusammenwirken.

Der linke Formbackenumlauf und der rechte Formbackenumlauf sind so zueinander angeordnet, dass der lineare Formstreckenabschnitt 1f des linken Formbackenumlaufs und der lineare Formstreckenabschnitt 1f des rechten Formbackenumlaufs parallel aneinander liegen und die linken und die rechten Formbacken in dem Formbackenabschnitt als Formbackenpaare mit zueinander gewandten Formflächen 5f angeordnet sind.

Der düsenförmige Spritzkopf 9s des Extruders 9 ist mit seiner Ausgangsöffnung am Eingang der Formstrecke 1f angeordnet. Über den Spritzkopf 9s wird der Kunststoffschmelzeschlauch in die Formstrecke 1f des Korrugators eingespritzt. Über entsprechende Drucksteuerung werden die an der Innenseite und die an der Außenseite des Kunststoffschmelzeschlauchs in der Formstrecke 1f einwirkenden Drücke gesteuert. Abhängig von der Ausbildung der Düseneinrichtung des Spritzkopfs 1s können ein- oder mehrwandige Kunststoffrohre hergestellt werden.

Die Formbacken 5 sind in einer ortsfesten Führungseinrichtung 6 geführt. Die ortsfeste Führungseinrichtung 6 ist in dem dargestellten Ausführungsbeispiel zusammengesetzt aus
- einer Führungseinrichtung 6u in den vier Umlenkbereichen des Korrugators, d.h. in dem Umlenkbereich der linken und rechten Formbacken im Einlaufabschnitt 1e und in dem Umlenkbereich der linken und rechten Formbacken im Auslaufabschnitt 1a und
- einer Führungseinrichtung 6z in dem Zwischenabschnitt des Korrugators mit der linearen Formstrecke 1f zur Führung der Formbackenpaare und mit den zwei Rückführungen 1r zur Führung der linken und rechten Formbacken 5 vom Ende der Formstrecke 1f zum Anfang der Formstrecke 1f.

Die Führungseinrichtung 6u in den Umlenkbereichen des Korrugators ist in dem dargestellten Ausführungsbeispiel der Figur 1 gebildet durch an den Formbacken 5 ausgebildete Führungsstifte 5i, die in ortsfeste Führungsnuten in dem ortsfesten Führungsgestell eingreifen. Die Ausgestaltung der Führungsstifte und der zugeordneten Führungsnuten wird nachfolgend noch im Detail erläutert.

Die Führungsstifte 5i werden in den Führungsnuten seitlich geführt, d.h. unter Abstützung seitlicher Kräfte. Die Formbacken 5 werden mit ihren Führungsflächen an der Unterseite unter vertikaler Gewichtsabstützung auf einer gestellfesten, horizontalen Auflagerfläche gleitend geführt. Die gestellfeste Auflagerfläche kann an den Führungsnuten angrenzend mit der Oberkante der Führungsnut fluchtend ausgebildet sein.

Die Führungseinrichtung 6z in dem Zwischenabschnitt des Korrugators ist durch eine ortsfeste Führungs- und/oder Temperierkörpereinrichtung 8 gebildet (sh. Fig. 1a). Die Führungs- und/oder Temperierkörpereinrichtung 8 wird durch Führungs- und/oder Temperierkörper 8i gebildet. Die Führungs- und/oder Temperierkörper 8i sind als längliche Körper ausgebildet mit Längserstreckung in Produktionsrichtung. In den Führungs- und/oder Temperierkörpern 8i sind in Längsrichtung verlaufende Temperierkanäle 8k ausgebildet, die von einem Temperiermittel durchflossen sind. Sie liegen in Längsrichtung hintereinander auf Stoß und in Querrichtung aufeinander und bilden einen Aufnahmeraum für die passierenden Formbacken bzw. Formbackenpaare.

In der Formstrecke 1f werden die passierenden Formbackenpaare von den Führungs- und/oder Temperierkörpern 8i bei dem dargestellten Ausführungsbeispiel vierseitig umgeben. In den Rückläufen 1r werden die passierenden Formbacken dreiseitig umgeben.

Die den Formbackenpaaren bzw. Formbacken zugewandten Flächen der Führungs- und/oder Temperierkörper 8i bilden Führungs- und/oder Temperierflächen 8f, auf denen die passierenden Formbacken unmittelbar aufliegend gleitend geführt sind oder mit geringem Abstand vorbeigleiten. Die unmittelbar aufliegende gleitende Führung erfolgt an der Unterseite und gegebenenfalls an einer Seitenfläche der Formbacken. Das Vorbeigleiten mit geringem Abstand erfolgt an der Oberseite der Formbacken.

Sowohl im Falle der unmittelbaren Auflage als auch im Falle des geringen Abstandes erfolgt über die Führungs- und/oder Temperierflächen eine Wärmeübertragung im Sinne einer Temperierung der Formbacken. Im Fall der unmittelbaren Auflage auf den Führungs- und/oder Temperierflächen 8f erfolgt zusätzlich zur Temperierung eine flächige Gleitführung der Formbacken.

In der Führungs- und/oder Temperierkörpereinrichtung 8 sind zusätzlich zu den Führungs- und/oder Temperierflächen 8f Führungsnuten ausgebildet zur Aufnahme und Führung der an den Formbacken ausgebildeten Führungsstifte. Die Führungsnuten in den Führungs- und/oder Temperierkörpern 8i werden gebildet, indem zwischen aneinander angrenzenden Führungs- und/oder Temperierkörpern 8i längsnutenförmige Zwischenräume gebildet sind. Die Führungsnuten können alternativ oder zusätzlich auch in den einzelnen Führungs- und/oder Temperierkörpern 8i ausgebildet sein. Vorzugsweise sind die Führungsnuten in der Führungs- und/oder Temperierkörpern 8i so ausgebildet, dass die Führungsstifte mit seitlichem Spiel darin laufen, da die eigentliche Führung der Formbacken in der Führungs- und/oder Temperierkörpereinrichtung 8 vorzugsweise an den Führungs- und/oder Temperierflächen 8f über flächige Gleitführung mit der Außenseite der Formbacken erfolgt. Dies gilt auch für Führungsnuten, die in Zwischenräumen zwischen den Temperierkörpern 8i ausgebildet sind.

Bei abgewandelten Ausführungen können auch in der Führungseinrichtung 6u der Umlenkbereiche ortsfeste Führungs- und/oder Temperierkörper 8i angeordnet sein, in die die in den Formbacken ausgebildeten Führungsstifte 5i zur Führung der Formbacken eingreifen, wobei über die Führungs- und/oder Temperierflächen der Führungs- und/oder Temperierkörper zusätzlich auch eine Temperierung der passierenden Formbacken in diesem Bereich erfolgt.

Wie in der Figur 1a gezeigt, sind in der Führungs- und Temperierkörpereinrichtung 8 Vakuumeinrichtungen 15 ausgebildet, die in der Formstrecke in die passierenden Formbacken von unten her Vakuum einleiten. Die Vakuumeinrichtungen 15 durchgreifen hierfür als Durchgangsschlitze 15s die bodenseitigen Führungs- und Temperierkörper 8i und münden über die Vakuumanschlüsse 15a an der Unterseite der Formbacken in die Vakuumkanäle 15k, die in den Formbacken ausgebildet sind und ihrerseits mit ihren inneren Enden in die Formflächen 5f münden.

Die Vakuumkanäle 15k bilden mit ihren äußeren Enden eine gleitende Anschlussverbindung mit den, die bodenseitigen Führungs- und Temperierkörper durchgreifenden Durchgangsschlitzen 15s, während die Formbacken über die bodenseitigen Führungs- und Temperierkörper 8i gleiten. Die Durchgangsschlitze 15s der Vakuumeinrichtungen sind an einem nicht dargestellten Vakuumversorgungssystem angeschlossen, welches im dargestellten Ausführungsbeispiel an der Unterseite der Grundplatte angeordnet ist, die die bodenseitigen Führungs- und Temperierkörper 8i trägt.

Es sind abgewandelte Ausführungsbeispiele vorgesehen, bei denen die Vakuumeinrichtungen 15 mit ihren Durchgangsschlitzen 15s von oben her die deckenseitigen Führungs- und Temperierkörper 8i durchgreifen und Vakuum von oben her in die Formbacken einleiten. Die in den Formbacken ausgebildeten Vakuumkanäle 15k sind in diesem Fall in den Formbacken die obere Formbackenhälfte von der Oberseite her bis zur Formfläche 8f durchgreifend ausgebildet, um die Formflächen 5f zu umgeben. Die Anschlusseinrichtungen 15a sind am oberen Ende der Vakuumkanäle 15k auf der Oberseite der Formbacken ausgebildet und bilden eine gleitende Anschlussverbindung mit den die deckenseitigen Führungs- und Temperierkörper 8i durchgreifenden Durchgangsschlitze der Vakuumeinrichtung, während die Formbacken unter den deckenseitigen Führungs- und Temperierkörper 8i passieren.

Die Figuren 2 und 3 zeigen unterschiedliche Ausführungsbeispiele der zum Einsatz in der Vorrichtung in Fig. 1 bestimmten Formbacken. Die Formbacken sind in den Figuren jeweils mit den Bezugszeichen 5 versehen. In den Figuren 2 und 3 sind die Formbacken 5 jeweils paarweise als Formbackenpaare dargestellt. Die linken und die rechten Formbacken sind jeweils spiegelsymmetrisch zueinander ausgebildet. Jeder Formbacken weist Führungsstifte 5i an der Oberseite und/oder an der Unterseite des Formbacken auf. An der Seitenfläche, die von dem jeweils anderen Formbacken des Formbackenpaares abgewandt ist, weist jeder Formbacken eine Zahnreiheneinrichtung 5z auf. An den zueinander gewandten Innenseiten der Formbacken des Formbackenpaares sind die Formflächen 5f ausgebildet, die bei der Herstellung der Rohre in der Formstrecke, die zusammengesetzte Rohrform haben, zur Ausformung des Rohres bilden.

Die Formbacken in Fig. 2 unterscheiden sich von den Formbacken in Fig. 3 darin, dass die Formbacken in Fig. 2 jeweils eine innenliegende Zahnreiheneinrichtung 5z und die Formbacken in Fig. 3 jeweils eine aufliegende Zahnreicheneinrichtung 5z aufweisen.

Die innenliegende Zahnreiheneinrichtung besteht jeweils aus einer oder mehreren innenliegenden Zahnreihen, d.h. Zahnreihen, die versenkt in der Seitenfläche des Formbackens nicht über die ebene Seitenfläche überstehend ausgebildet ist bzw. sind. Die aufliegende Zahnreiheneinrichtung besteht jeweils aus einer oder mehreren aufliegenden Zahnreihen, d.h. Zahnreihen, die aufliegend auf der Seitenfläche des Formbacken über die ebene Seitenfläche überstehend ausgebildet ist bzw. sind.

Die Formbacken der Figuren 2/1a, 2/1b, und 2/1c weisen jeweils 2 Führungsstifte 5i auf, und zwar einen auf der Oberseite und einen auf der Unterseite des Formbackens. Die Formbacken dieser Figuren unterscheiden sich jeweils in der Ausgestaltung der jeweils innenliegenden Zahnreiheneinrichtung 5z.

Die Formbacken in Fig. 2/1a weisen als Zahnreiheneinrichtung 5z jeweils eine mittige innenliegende einzige Zahnreihe auf.

Die Formbacken der Fig. 2/1b weisen als Zahnreiheneinrichtung 5z jeweils eine obere innenliegende Zahnreihe und eine unten innenliegende Zahnreihe auf. Die Zahnreihen sind jeweils im Bereich der Oberkante bzw. im Bereich der Unterkante ausgebildet, und zwar mit geringem Abstand von der Oberkante bzw. mit geringem Abstand von der Unterkante des Formbackens.

Die Formbacken in Fig. 2/1c weisen ebenfalls eine obere Zahnreihe und eine untere Zahnreihe auf. Diese sind im Unterschied zu dem Ausführungsbeispiel in Fig 2/1b jedoch unmittelbar in der Oberkante bzw. in der Unterkante des Formbacken ausgebildet.

Die Formbacken der Fig. 2/2a, 2/2b, 2/2c und 2/2d unterscheiden sich von den Formbacken der Fig. 2/1a, 2/1b und 2/1c lediglich in der Anordnung der Führungsstifte 5i, und zwar darin, dass bei den Formbacken in den Figure 2/2a, 2/2b, 2/2c und 2/2d die zwei Führungsstifte 5s nur an der Oberseite der Formbacken angeordnet sind. Die Formbacken der Fig. 2/2d unterscheiden sich von den Formbacken der Figur 2/2c dadurch, dass bei den Formbacken der Fig. 2/2d die Führungsstifte an der Oberseite in Produktionsrichtung gesehen hintereinander angeordnet sind in einer gemeinsamen vertikalen Ebene fluchtend, wie erkennbar ist in Verbindung Fig. 2/2ds, die eine Seitenansicht der Fig. 2/2ds darstellt.

Die Formbacken der Fig. 2/3a, 2/3b, 2/3c und 2/3d unterscheiden sich von den vorangehenden Formbacken nur darin, dass die beiden Führungsstifte 5i an der Unterseite anstelle an der Oberseite angeordnet sind.

Die Formbacken der Fig. 2/4a, 2/4b, 2/4c und 2/4d unterscheiden sich von den vorangehenden Formbacken nur darin, dass jeder Formbacken drei Führungsstifte 5i anstelle von zwei Führungsstiften aufweist, und zwar einen Führungsstift 5i an der Oberseite und zwei Führungsstifte 5i an der Unterseite aufweist.

Es sind weitere abgewandelte Ausführungsbeispiele denkbar, bei denen die drei Führungsstifte 5i in anderer Weise auf der Oberseite und der Unterseite des Formbackens verteilt sind. Es sind auch weitere abgewandelte Ausführungsbeispiele denkbar, bei denen mehr als drei Führungsstifte 5i an der Oberseite und auf der Unterseite des Formbackens angeordnet sind.

Formbacken der Figuren 2/5: Varianten u1, u2, u3, u4, u4` und u5 unterscheiden sich von den vorangehend beschriebenen Formbacken der Figuren 2/1 bis 2/4 darin, dass die Zahnreiheneinrichtung 5z bei den Varianten u1 bis u5 jeweils unsymmetrisch über die Höhe der Seitenfläche ausgebildet ist. Die Situation ist wie folgt:
Bei den Varianten u1 und u2 besteht die Zahnreiheneinrichtung 5z jeweils aus nur einer Zahnreihe. Diese ist bei der Variante u1 unmittelbar in der oberen Kante des Formbacken ausgebildet. Bei der Variante u2 ist die Zahnreihe 5z ebenfalls in der oberen Hälfte der Seitenfläche ausgebildet, jedoch mit Abstand unterhalb des oberen Randes der Seitenfläche, d.h. mit Abstand unterhalb der oberen Kante des Formbacken ausgebildet.

Bei der Variante u3 umfasst die Zahnreiheneinrichtung 5z zwei Zahnreihen, und zwar eine erste unmittelbar in der oberen Kante des Formbackens und eine zweite in der Mitte der Höhe der Seitenfläche.

Bei der Variante u4 besteht die Zahnreiheneinrichtung 5z aus nur einer Zahnreihe. Diese ist jedoch als breite Zahnreihe ausgebildet, die sich in der oberen Hälfte der Seitenfläche über die gesamte obere Hälfte der Seitenfläche erstreckt.

Bei der Variante u4` sind die Formbacken gegenüber den Formbacken der Variante u4 um 180° gedreht, so dass bei der Variante u4` die breite Zahnreihe in der gesamten unteren Hälfte des Formbackens ausgebildet ist und sich entlang der Höhe des Formbackens bis in die Mittellinie erstreckt.

Bei der Variante u5 ist in Abwandlung der Variante u4 zusätzlich zu der breiten Zahnreihe, die in der gesamten oberen Hälfte der Seitenfläche ausgebildet ist am unteren Rand der Seitenfläche, und zwar unmittelbar im Bereich der unteren Kante des Formbackens zusätzlich eine normal schmale Zahnreihe ausgebildet, d.h. eine Zahnreihe, die Normalbreite aufweist, wie sie bei den Zahnreihen der Ausführungen der Figuren 2/1 bis 2/4 jeweils als einheitliche Breite der Zahnreihen ausgebildet ist.

Die Formbacken der vorangehend beschriebenen Varianten u1 bis u5 mit der unsymmetrischen Verteilung der Zahnreiheneinrichtung über die Höhe der Seitenfläche können Vorteile für die übrige Gestaltung des Formbackens aufweisen. Denn bei Ausführungen, bei denen die Seitenfläche der Formbacken jeweils einen Bereich aufweist, in dem keine Verzahnungseinrichtung 5z ausgebildet ist, ist die Wanddicke nicht durch die innenliegende Zahnreiheneinrichtung reduziert. Die nicht reduzierte Wanddicke kann genutzt werden, da in diesem Bereich eine freie Gestaltung für die Aufnahme von Einrichtungen möglich ist und dort oder in der Nähe davon Einrichtungen integriert werden können, wie Vakuumeinrichtungen oder Vakuumanschlusseinrichtungen und/oder apparative Einrichtungen, wie Sensoreinrichtungen und/oder Elektronikkomponenten.

Die unsymmetrische Verteilung der Zahnreiheneinrichtung, insbesondere die Anordnung der Zahnreiheneinrichtung ausschließlich in der oberen Hälfte und/oder über die gesamte obere Hälfte der Seitenfläche oder die Anordnung ausschließlich in der unteren Hälfte und/oder über die gesamte untere Hälfte des Formbackens kann auch dazu genutzt werden, dass eine besonders günstig gestaltete korrespondierende, vorzugsweise motorisch angetriebene Umlenkritzeleinrichtung im Umlenkbereich des Formbackenumlaufs oder eine Antriebsritzeleinrichtung und/oder Spielausgleichsritzeleinrichtung in einem linearen Abschnitt des Formbackenumlaufs kombiniert werden kann. In diesem Zusammenhang sei verwiesen auf Figuren 2/8 bis 2/11.

In der Figur 2/8a2 kämmt ein Umlenkritzel 13 einer linken Umlenkritzeleinrichtung mit breiter Verzahnung mit der entsprechenden breiten Zahnreihe der Zahnritzeleinrichtung 5z an der Seitenfläche des linken Formbacken und ein Umlenkritzel einer rechten Umlenkritzeleinrichtung, welches entsprechend breite Verzahnung aufweist, kämmt mit der breiten Zahnreihe an der Seitenfläche des rechten Formbackens.

In den Figuren 2/8a3, 2/8a4 und 2/8a5 ist gezeigt, wie das Formbackenpaar im Bereich der Formstrecke in einer Führungs- und Temperierkörpereinrichtung geführt ist, welche entsprechend aufgebaut ist wie in Figur 1a.

In den Figuren 2/8a4 und 2/8a5 ist das Zusammenwirken der Formbacken mit einer Spielausgleichseinrichtung gezeigt, wobei in Figur 2/8a4 die linke Spielausgleichseinrichtung und die rechte Spielausgleichseinrichtung jeweils ein Spielausgleichsritzel 14 mit schmaler Verzahnung aufweist, die lediglich mit dem unteren Bereich der unteren Verzahnung an der Seitenfläche des linken Formbackens und der Seitenfläche des rechten Formbackens ausgebildeten Zahnreihe kämmt.

In Figur 2/8a5 ist entsprechend wie in Figur 2/8a4 das Zusammenwirken der Formbacken mit einer linken und einer rechten Spielausgleichseinrichtung 14 gezeigt. In Figur 2/8a5 weisen die Ritzel 14 der Spielausgleichseinrichtung jeweils eine breite Verzahnung auf, die entsprechend breit ist wie die Zahnreihe der auf den Formbacken ausgebildeten Zahnreiheneinrichtung.

Die Spielausgleichsritzel 14 in Figur 2/8a4 und Figur 2/8a5 durchstreifen jeweils einen Spalt 8s unterhalb der seitlichen Führungs- und Temperierkörper, um mit der übrigen Verzahnung 5z der Formbacken zu kämmen.

Bei der Ausführung in Figur 2/8a4 ist die Spaltbreite geringer als bei der Ausführung in Figur 2/8a5, da das Spielausgleichsritzel in Figur 2/8a4 geringere Breite aufweist als das Spielausgleichsritzel in Figur 2/8a5. Mit der geringeren Spaltbreite ergeben sich Vorteile für eine gleichmäßigere Temperaturverteilung in dem Formbacken. Der Einfluss der Breite des Spaltes unterhalb des seitlichen Führungs- und Temperierkörpers auf die Temperaturverteilung im Formbacken kann vergleichbar sein mit dem Einfluss der an der Oberseite der Formbacken eingreifenden Vakuumeinrichtung, so dass sich trotz des seitlichen Spaltes gegebenenfalls auch bei großer Spaltbreite insgesamt in der oberen und unteren Hälfte des Formbackens eine gleichmäßige Temperaturverteilung ergeben kann.

Es sind daher auch Ausführungen möglich, bei denen auch im Falle des Einsatzes von Spielausgleichsritzeln mit geringer Verzahnungsbreite der Spalt unterhalb der seitlichen Führungs- und Temperierkörper gleiche Spaltbreite aufweisen kann, wie für den Einsatz von Spielausgleichsritzeln mit breiter Verzahnung.

Bei den Ausführungen der Figuren 2/6 - Varianten v1 und v2 ist die Formfläche 5f in die untere Formbackenhälfte gegenüber der herkömmlichen mittigen Anordnung versetzt und die in der Seitenfläche ausgebildete Zahnreiheneinrichtung 5z nur in der oberen Formbackenhälfte ausgebildet. Dadurch wird in der unteren Hälfte des Formbackenpaares um die Formfläche 5f herum ungefähr gleiche Wanddicke erhalten und in der oberen Hälfte des Formbackenpaares verstärkte Wanddicke erhalten. Die verstärkte Wanddicke kann für die Anordnung der Zahnreiheneinrichtung in der oberen Hälfte der Seitenfläche genutzt werden und auch für die Aufnahme von in die Formbacken eingreifenden Einrichtungen, wie z.B. von oben her eingreifende Vakuumeinrichtung mit von oben zuführenden Vakuumkanälen, die in der Mitte der Formbacken konzentrisch um die Formfläche herumlaufen. Über die z.B. von oben eingreifende Vakuumeinrichtung kann eine Störung der Temperaturverteilung in der oberen Hälfte der Formbacken erhalten werden, die eine Störung der Temperaturverteilung aufgrund der nur oder vorwiegend in der unteren Hälfte der Seitenfläche ausgebildete Zahnreiheneinrichtung erhalten wird. In diesem Zusammenhang kann auch der Umstand, dass die Formbacken mit ihrer Unterseite auf der unteren Führungs- und Temperierfläche der Führungs- und Temperierkörpereinrichtung laufen, die Störung der Temperaturverteilung aufgrund der ausschließlich oder überwiegend in der unteren Hälfte der Seitenfläche der Formbacken ausgebildeten Zahnreiheneinrichtung auch mehr oder weniger kompensiert werden.

Entsprechend kann die Anordnung der Vakuumeinrichtung 15 mit Anschlusseinrichtung 15a an der Oberseite oder an der Unterseite der Formbacken auch eine die Temperaturverteilung störende unsymmetrische Anordnung und Anzahl von Führungsstiften 5i an der Oberseite oder Unterseite kompensieren. Dies gilt für alle in den Figuren dargestellten Ausführungen und Abwandlungen.

Bei den Ausführungen der Figuren 2/7: Varianten s1 bis s3 ist die Formfläche gleich wie bei den Ausführungen der Figuren 2/1 bis 2/5 herkömmlich mittig angeordnet. Dabei sind aber die Zahnreihen der Zahnreiheneinrichtung 5z symmetrisch über die Höhe der Seitenfläche der Formbacken verteilt, d.h. gleichmäßig in der oberen und der unteren Hälfte der Seitenfläche ausgebildet.

Bei der Variante s1 umfasst die Zahnreiheneinrichtung 5z nur eine Zahnreihe. Die Zahnreihe hat eine relativ große Breite, d.h. sie weist im Vergleich zu der einheitlichen Breite der Zahnreihen bei den Ausführungen der Figuren 2/1 bis 2/4 größere Breite in Richtung der Höhe der Seitenfläche auf.

Bei der Variante s2 ist die Zahnreihe besonders breit. Sie erstreckt sich über die gesamte Höhe der Formbackenseitenfläche.

Bei der Variante s3 sind jeweils vier schmale Zahnreihen an der Seitenfläche der Formbacken ausgebildet. Die Breite der Zahnreihen ist jeweils identisch und entspricht der einheitlichen Zahnbreite der Ausführungen der Figuren 2/1 bis 2/4. Die vier Zahnreihen sind bei der Variante s3 gleichmäßig über die Seitenfläche der Formbacken verteilt, d.h. zwei Zahnreihen sind jeweils in der oberen Hälfte der Seitenfläche und zwei Zahnreihen in der unteren Hälfte der Seitenfläche ausgebildet. Dabei ist die obere Zahnreihe jeweils am oberen Rand der Seitenfläche, im dargestellten Fall in der oberen Kante des Formbackens ausgebildet und die untere Zahnreihe am unteren Rand der Seitenfläche, im dargestellten Fall in der unteren Kante des Formbacken ausgebildet. Was die Anordnung der Führungsstifte betrifft:
Bei den Ausführungen der Figuren 2/5, 2/6, 2/7 und 2/8 ist an der Oberseite und/oder an der Unterseite der Formbacken jeweils ein Führungsstift angeordnet. Diese sind in Produktionsrichtung zueinander versetzt und greifen in stationäre Führungsnuten ein, d.h. der untere Führungsstift greift in eine untere Führungsnut ein und der obere Führungsstift greift in eine obere Führungsnut ein. Bei bevorzugten Ausführungen sind die beiden Führungsnuten geometrisch unterschiedlich gestaltet, und zwar derart, dass in Kurvenbereichen, insbesondere im Umlenkbereich des Formbackenumlaufs ein Schwenken der Formbacken erzeugt wird. Hinzu kommt, dass im Umlenkbereich des Formbackenumlaufs eine Umlenkritzeleinrichtung mit der Zahnreiheneinrichtung kämmt, die jeweils an der Seitenfläche der Formbacken ausgebildet ist, d.h. an der von der Formfläche 5f abgewandten Rückseite der Formbacken. Alternativ sind Ausführungen möglich, bei denen die Führungsnuten identisch, vorzugsweise kreisförmig, d.h. kreisbogenförmig ausgebildet sind. Auch bei diesen Ausführungen kann in den Umlenkbereichen ein Umlenkritzel mit der an der Seitenfläche der Formbacken ausgebildeten Zahnreiheneinrichtung kämmen.

Bei den Ausführungen der Figuren 2/5, 2/6, 2/7 und 2/8 kann anstelle der Anordnung von jeweils einem Führungsstift an der Oberseite und einem Führungsstift an der Unterseite des Formbackens auch eine abgewandelte Anordnung der Führungsstifte vorgesehen sein, wie sie in den Figuren 2/1 bis 2/3 in den unterschiedlichen Varianten ausgebildet ist. Anstelle der nur zwei Führungsstifte am Formbacken können auch mehr Führungsstifte am Formbacken angeordnet sein, z.B. drei Führungsstifte, wie z.B. in Figur 2/4 gezeigt.

Bei Ausführungen mit Formbacken, die ebenfalls jeweils nur zwei Führungsstifte aufweisen, die Führungsstifte aber jeweils nur an der Unterseite der Formbacken ausgebildet sind, können folgende konkrete Ausführungen vorgesehen sein:
Es sind Ausführungen möglich, bei denen die beiden Führungsstifte vorzugsweise in den Umlenkbereichen in separate bodenseitige Führungsnuten der Führungseinrichtung eingreifen und dort seitlich geführt werden. Bei einer ersten Ausführungsvariante haben die beiden separaten Führungsnuten unterschiedliche Geometrien. Bei einer zweiten Ausführungsvariante haben die beiden Führungsnuten die gleiche Geometrie, und zwar vorzugsweise kreisbogenförmige Gestaltung. Vorzugsweise ist in beiden Ausführungsvarianten im Umlenkbereich ein Umlenkritzel gelagert, das vorzugsweise motorisch angetrieben ist und mit der Verzahnungseinrichtung an der Seitenfläche der Formbacken kämmt.

Bei einer weiteren Ausführungsvariante greifen die beiden Führungsstifte in eine gemeinsame bodenseitige Führungsnut ein. Diese gemeinsame Führungsnut weist vorzugsweise kreisbogenförmige Gestaltung auf. Auch hierbei ist vorzugsweise ein motorisch angetriebenes Umlenkritzel im Umlenkbereich gelagert und kämmt mit der Verzahnungseinrichtung an der Seitenfläche der Formbacken.

Alternativ sind Ausführungen mit jeweils zwei Führungsstiften an den Formbacken möglich, bei denen die beiden Führungsstifte nur an der Oberseite der Formbacken ausgebildet sind. Diese Ausführungen weisen Führungsnuten auf, die deckenseitig angeordnet sind und gleich ausgebildet sein können, wie vorangehend für die bodenseitige Anordnung beschrieben und ferner entsprechend Umlenkritzel aufweisen.

Bei den in den Figuren dargestellten Ausführungen können die Führungsstifte jeweils als mit den Formbacken bewegungsfeste Führungsstifte, d.h. mit den Formbacken starre Führungsstifte ausgebildet sein. Die Führungsstifte können bei abgewandelten Ausführungen jedoch auch als in den Formbacken drehbare Führungsstifte ausgeführt sein, z.B. auch als Führungsrollen, die an ihrem freien Ende einen im Formbacken drehbaren Führungskopf mit vorzugsweise größerem Durchmesser als der Schaft aufweist. Gleich wie die Führungsstifte können die Führungsrollen in zugeordneten Führungsnuten geführt sein.

Die Formbacken der Figuren 3 unterscheiden sich von den Formbacken der Figuren 2 darin, dass die Zahnreiheneinrichtung 5z als aufliegende Zahnreiheneinrichtung ausgebildet ist, d.h. die innenliegende Zahnreiheneinrichtung der Ausführungsbeispiele der Figuren 2 ist jeweils ersetzt durch eine entsprechend gestaltete aufliegende Zahnreiheneinrichtung.

Bei den Ausführungen der Figuren kann in den Formbacken jeweils eine Vakuumkanaleinrichtung 15k vorgesehen sein, die über an der Oberseite der Formbacken und/oder an der Unterseite der Formbacken ausgebildete Anschlusseinrichtungen 15a von einer Vakuumeinrichtung von oben bzw. von unten her mit Vakuum beaufschlagt werden.

### Bezugszeichenliste

- 1: Korrugator
- 1a: Auslaufabschnitt
- 1e: Einlaufabschnitt
- 1f: Formstrecke
- 1r: Rückführung
- 1q: Querträger
- 1z: Zwischenabschnitt
- 5: Formbacken
- 5f: Formfläche
- 5i: Führungsstift
- 5ir: Führungsrolle
- 5z: Zahnreiheneinrichtung
- 6: ortsfeste Führungseinrichtung
- 8: Führungs- und/oder Temperierkörpereinrichtung
- 8i: Führungs- und/oder Temperierkörper
- 8k: Temperierkanal
- 8u: Temperierkanalumleitung
- 8f: Temperierfläche
- 8s: Spalt
- 9: Extruder
- 9f: Formluftzuführung
- 10: Kunststoffrohr
- 9s: Spritzkopf
- 11: Umlenkritzel
- 13: Umlenkritzel, vorzugsweise motorisch angetrieben
- 12: Spielausgleicheinrichtung mit Ritzeleinrichtung eingreifend in Zahnreiheneinrichtung der Formbackenpaare geführt in der Formstrecke
- 14: Spielausgleichsritzel

## Patentansprüche

1. Vorrichtung zum Herstellen von Kunststoffrohren (10), vorzugsweise Kunststoffwellrohren (10)
mit einem Extruder (9) mit Spritzkopf (9s) und einem Korrugator (1), in den über den Spritzkopf (9s) ein Kunststoffschmelzeschlauch zum Ausformen des Kunststoffrohres (10) eingeleitet wird, wobei vorgesehen ist,
- dass der Korrugator (1) eine Formstrecke (1f) aufweist, in der Formbacken (5) paarweise in Produktionsrichtung geführt werden,
- dass in einem Einlaufabschnitt (1e) des Korrugators (1) die Formbacken (5) zu Formbackenpaaren zum Anfang der Formstrecke (1f) zusammengeführt werden,
- dass in einem Auslaufabschnitt (1a) des Korrugators (1) die Formbacken der Formbackenpaare vom Ende der Formstrecke (1f) auseinander geführt werden,
- dass in einem zwischen dem Einlaufabschnitt (1e) und dem Auslaufabschnitt (1a) angeordneten Zwischenabschnitt (1z) des Korrugators (1) die Formstrecke (1f) zur Führung der Formbackenpaare ausgebildet ist und mindestens eine Rückführung (1r) ausgebildet ist, in der die Formbacken (5) vom Ende der Formstrecke (1f) zum Anfang der Formstrecke (1f) rückgeführt werden,
- dass die linken Formbacken in einem linken Formbackenumlauf endlos geführt sind und die rechten Formbacken in einem rechten Formbackenumlauf endlos geführt sind, wobei der linke Formbackenumlauf und der rechte Formbackenumlauf jeweils einen als Umlenkbereich ausgebildeten Einlaufabschnitt, vorzugsweise mit Umlenkritzeleinrichtung, einen linearen Formstreckenabschnitt und einen als Umlenkbereich ausgebildeten Auslaufabschnitt, vorzugsweise mit Umlenkritzeleinrichtung, und einen den Auslaufabschnitt und den Einlaufabschnitt verbindenden Rücklaufabschnitt aufweist,
- dass der Korrugator eine ortsfeste Führungseinrichtung zur Führung der Formbacken (5) aufweist, wobei die ortsfeste Führungseinrichtung durch jeweils eine ortsfeste Führungseinrichtung (6u) in den Umlenkbereichen und durch eine ortsfeste Führungseinrichtung (6z) in dem Zwischenabschnitt (1z) gebildet ist,
- dass jeder Formbacken (5) mindestens zwei Führungsstifte (5i) zum Eingriff in eine oder mehrere Führungsnuten der ortsfesten Führungseinrichtung und eine Zahnreiheneinrichtung (5z) aufweist,
- dass die mindestens zwei Führungsstifte auf der Oberseite und/oder der Unterseite des Formbackens (5) angeordnet sind und die Zahnreiheneinrichtung (5z) an einer Seitenfläche des Formbackens (5) zum Zusammenwirken mit einer Umlenkritzeleinrichtung in den Umlenkbereichen und/oder zum Zusammenwirken mit einer Ritzeleinrichtung im Zwischenabschnitt des Korrugators, vorzugsweise Formstrecke angeordnet ist,
- dass die mindestens zwei Führungsstifte einen ersten Führungsstift und einen zweiten Führungsstift umfassen,
- dass zwischen dem ersten Führungsstift und dem zweiten Führungsstift ein Abstand entlang der Erstreckung des Formbackens (5) in Produktionsrichtung ausgebildet ist, vorzugsweise zur Schwenkbewegung des Formbackens im Umlenkbereich,
- dass der erste Führungsstift und der zweite Führungsstift an derselben Seite des Formbackens (5) angeordnet sind oder an unterschiedlichen Seiten des Formbackens (5), vorzugsweise an gegenüberliegenden Seiten des Formbackens (5) angeordnet sind,
**dadurch gekennzeichnet,**
(i) - dass die Zahnreiheneinrichtung (5z) als innenliegende Zahnreiheneinrichtung ausgebildet ist, die durch eine innenliegende Zahnreihe entlang der Produktionsrichtung erstreckend oder mehrere innenliegende Zahnreihen entlang der Produktionsrichtung erstreckend gebildet ist,
oder
- dass die Zahnreiheneinrichtung (5z) als aufliegende Zahnreiheneinrichtung ausgebildet ist, die durch eine aufliegende Zahnreihe entlang der Produktionsrichtung erstreckend oder mehrere aufliegende Zahnreihen entlang der Produktionsrichtung erstreckend gebildet ist,
wobei vorgesehen ist,
dass die Zahnreiheneinrichtung, an der Seitenfläche des Formbacken bezüglich der Höhe der Seitenfläche unsymmetrisch verteilt ausgebildet ist,
und
(ii) dass die Anzahl der Führungsstifte an der Oberseite des Formbacken unterschiedlich oder gleich ist zu der Anzahl der Führungsstifte an der Unterseite des Formbacken,
wobei jeder Formbacken genau zwei Führungsstifte oder genau drei Führungsstifte oder mehr als drei Führungsstifte aufweist.

2. Vorrichtung zum Herstellen von Kunststoffrohren (10), vorzugsweise Kunststoffwellrohren (10), vorzugsweise nach Anspruch 1,
mit einem Extruder (9) mit Spritzkopf (9s) und einem Korrugator (1), in den über den Spritzkopf (9s) ein Kunststoffschmelzeschlauch zum Ausformen des Kunststoffrohres (10) eingeleitet wird, wobei vorgesehen ist,
- dass der Korrugator (1) eine Formstrecke (1f) aufweist, in der Formbacken (5) paarweise in Produktionsrichtung geführt werden,
- dass in einem Einlaufabschnitt (1e) des Korrugators (1) die Formbacken (5) zu Formbackenpaaren zum Anfang der Formstrecke (1f) zusammengeführt werden,
- dass in einem Auslaufabschnitt (1a) des Korrugators (1) die Formbacken der Formbackenpaare vom Ende der Formstrecke (1f) auseinander geführt werden,
- dass in einem zwischen dem Einlaufabschnitt (1e) und dem Auslaufabschnitt (1a) angeordneten Zwischenabschnitt (1z) des Korrugators (1) die Formstrecke (1f) zur Führung der Formbackenpaare ausgebildet ist und mindestens eine Rückführung (1r) ausgebildet ist, in der die Formbacken (5) vom Ende der Formstrecke (1f) zum Anfang der Formstrecke (1f) rückgeführt werden,
- dass die linken Formbacken in einem linken Formbackenumlauf endlos geführt sind und die rechten Formbacken in einem rechten Formbackenumlauf endlos geführt sind, wobei der linke Formbackenumlauf und der rechte Formbackenumlauf jeweils einen als Umlenkbereich ausgebildeten Einlaufabschnitt, vorzugsweise mit Umlenkritzeleinrichtung, einen linearen Formstreckenabschnitt und einen als Umlenkbereich ausgebildeten Auslaufabschnitt, vorzugsweise mit Umlenkritzeleinrichtung, und einen den Auslaufabschnitt und den Einlaufabschnitt verbindenden Rücklaufabschnitt aufweist,
- dass der Korrugator eine ortsfeste Führungseinrichtung zur Führung der Formbacken (5) aufweist, wobei die ortsfeste Führungseinrichtung durch jeweils eine ortsfeste Führungseinrichtung (6u) in den Umlenkbereichen und durch eine ortsfeste Führungseinrichtung (6z) in dem Zwischenabschnitt (1z) gebildet ist,
- dass jeder Formbacken (5) mindestens zwei Führungsstifte (5i) zum Eingriff in eine oder mehrere Führungsnuten der ortsfesten Führungseinrichtung und eine Zahnreiheneinrichtung (5z) aufweist,
- dass die mindestens zwei Führungsstifte auf der Oberseite und/oder der Unterseite des Formbackens (5) angeordnet sind und die Zahnreiheneinrichtung (5z) an einer Seitenfläche des Formbackens (5) zum Zusammenwirken mit einer Umlenkritzeleinrichtung in den Umlenkbereichen und/oder zum Zusammenwirken mit einer Ritzeleinrichtung im Zwischenabschnitt des Korrugators, vorzugsweise Formstrecke angeordnet ist,
- dass die mindestens zwei Führungsstifte einen ersten Führungsstift und einen zweiten Führungsstift umfassen,
- dass zwischen dem ersten Führungsstift und dem zweiten Führungsstift ein Abstand entlang der Erstreckung des Formbackens (5) in Produktionsrichtung ausgebildet ist, vorzugsweise zur Schwenkbewegung des Formbackens im Umlenkbereich,
- dass der erste Führungsstift und der zweite Führungsstift an derselben Seite des Formbackens (5) angeordnet sind oder an unterschiedlichen Seiten des Formbackens (5), vorzugsweise an gegenüberliegenden Seiten des Formbackens (5) angeordnet sind,
**dadurch gekennzeichnet,**
(i) - dass die Zahnreiheneinrichtung (5z) als innenliegende Zahnreiheneinrichtung ausgebildet ist, die durch eine innenliegende Zahnreihe entlang der Produktionsrichtung erstreckend oder mehrere innenliegende Zahnreihen entlang der Produktionsrichtung erstreckend gebildet ist,
oder
- dass die Zahnreiheneinrichtung (5z) als aufliegende Zahnreiheneinrichtung ausgebildet ist, die durch eine aufliegende Zahnreihe entlang der Produktionsrichtung erstreckend oder mehrere aufliegende Zahnreihen entlang der Produktionsrichtung erstreckend gebildet ist,
wobei vorgesehen ist,
dass die Breite der Zahnreihe der Zahnreiheneinrichtung sich quer zur Produktionsrichtung mindestens über ein Drittel der Höhe des Formbackens, vorzugsweise über die Hälfte der Höhe des Formbacken, insbesondere über die gesamte Höhe des Formbacken erstreckt, und
(ii) dass die Anzahl der Führungsstifte an der Oberseite des Formbacken unterschiedlich oder gleich ist zu der Anzahl der Führungsstifte an der Unterseite des Formbacken,
wobei jeder Formbacken genau zwei Führungsstifte oder genau drei Führungsstifte oder mehr als drei Führungsstifte aufweist.

3. Vorrichtung zum Herstellen von Kunststoffrohren (10), vorzugsweise Kunststoffwellrohren (10), vorzugsweise nach einem der Ansprüche 1 oder 2,
mit einem Extruder (9) mit Spritzkopf (9s) und einem Korrugator (1), in den über den Spritzkopf (9s) ein Kunststoffschmelzeschlauch zum Ausformen des Kunststoffrohres (10) eingeleitet wird, wobei vorgesehen ist,
- dass der Korrugator (1) eine Formstrecke (1f) aufweist, in der Formbacken (5) paarweise in Produktionsrichtung geführt werden,
- dass in einem Einlaufabschnitt (1e) des Korrugators (1) die Formbacken (5) zu Formbackenpaaren zum Anfang der Formstrecke (1f) zusammengeführt werden,
- dass in einem Auslaufabschnitt (1a) des Korrugators (1) die Formbacken der Formbackenpaare vom Ende der Formstrecke (1f) auseinander geführt werden,
- dass in einem zwischen dem Einlaufabschnitt (1e) und dem Auslaufabschnitt (1a) angeordneten Zwischenabschnitt (1z) des Korrugators (1) die Formstrecke (1f) zur Führung der Formbackenpaare ausgebildet ist und mindestens eine Rückführung (1r) ausgebildet ist, in der die Formbacken (5) vom Ende der Formstrecke (1f) zum Anfang der Formstrecke (1f) rückgeführt werden,
- dass die linken Formbacken in einem linken Formbackenumlauf endlos geführt sind und die rechten Formbacken in einem rechten Formbackenumlauf endlos geführt sind, wobei der linke Formbackenumlauf und der rechte Formbackenumlauf jeweils einen als Umlenkbereich ausgebildeten Einlaufabschnitt, vorzugsweise mit Umlenkritzeleinrichtung, einen linearen Formstreckenabschnitt und einen als Umlenkbereich ausgebildeten Auslaufabschnitt, vorzugsweise mit Umlenkritzeleinrichtung, und einen den Auslaufabschnitt und den Einlaufabschnitt verbindenden Rücklaufabschnitt aufweist,
- dass der Korrugator eine ortsfeste Führungseinrichtung zur Führung der Formbacken (5) aufweist, wobei die ortsfeste Führungseinrichtung durch jeweils eine ortsfeste Führungseinrichtung (6u) in den Umlenkbereichen und durch eine ortsfeste Führungseinrichtung (6z) in dem Zwischenabschnitt (1z) gebildet ist,
- dass jeder Formbacken (5) mindestens zwei Führungsstifte (5i) zum Eingriff in eine oder mehrere Führungsnuten der ortsfesten Führungseinrichtung und eine Zahnreiheneinrichtung (5z) aufweist,
- dass die mindestens zwei Führungsstifte auf der Oberseite und/oder der Unterseite des Formbackens (5) angeordnet sind und die Zahnreiheneinrichtung (5z) an einer Seitenfläche des Formbackens (5) zum Zusammenwirken mit einer Umlenkritzeleinrichtung in den Umlenkbereichen und/oder zum Zusammenwirken mit einer Ritzeleinrichtung im Zwischenabschnitt des Korrugators, vorzugsweise Formstrecke angeordnet ist,
- dass die mindestens zwei Führungsstifte einen ersten Führungsstift und einen zweiten Führungsstift umfassen,
- dass zwischen dem ersten Führungsstift und dem zweiten Führungsstift ein Abstand entlang der Erstreckung des Formbackens (5) in Produktionsrichtung ausgebildet ist, vorzugsweise zur Schwenkbewegung des Formbackens im Umlenkbereich,
- dass der erste Führungsstift und der zweite Führungsstift an derselben Seite des Formbackens (5) angeordnet sind oder an unterschiedlichen Seiten des Formbackens (5), vorzugsweise an gegenüberliegenden Seiten des Formbackens (5) angeordnet sind,
**dadurch gekennzeichnet,**
(i) - dass die Zahnreiheneinrichtung (5z) als innenliegende Zahnreiheneinrichtung ausgebildet ist, die durch eine innenliegende Zahnreihe entlang der Produktionsrichtung erstreckend oder mehrere innenliegende Zahnreihen entlang der Produktionsrichtung erstreckend gebildet ist,
oder
- dass die Zahnreiheneinrichtung (5z) als aufliegende Zahnreiheneinrichtung ausgebildet ist, die durch eine aufliegende Zahnreihe entlang der Produktionsrichtung erstreckend oder mehrere aufliegende Zahnreihen entlang der Produktionsrichtung erstreckend gebildet ist,
und
(ii) dass die Anzahl der Führungsstifte an der Oberseite des Formbacken unterschiedlich ist zu der Anzahl der Führungsstifte an der Unterseite des Formbacken,
wobei jeder Formbacken genau zwei Führungsstifte oder genau drei Führungsstifte oder mehr als drei Führungsstifte aufweist.

4. Vorrichtung zum Herstellen von Kunststoffrohren (10), vorzugsweise Kunststoffwellrohren (10), vorzugsweise nach einem der Ansprüche 1 bis 3, mit einem Extruder (9) mit Spritzkopf (9s) und einem Korrugator (1), in den über den Spritzkopf (9s) ein Kunststoffschmelzeschlauch zum Ausformen des Kunststoffrohres (10) eingeleitet wird, wobei vorgesehen ist,
- dass der Korrugator (1) eine Formstrecke (1f) aufweist, in der Formbacken (5) paarweise in Produktionsrichtung geführt werden,
- dass in einem Einlaufabschnitt (1e) des Korrugators (1) die Formbacken (5) zu Formbackenpaaren zum Anfang der Formstrecke (1f) zusammengeführt werden,
- dass in einem Auslaufabschnitt (1a) des Korrugators (1) die Formbacken der Formbackenpaare vom Ende der Formstrecke (1f) auseinander geführt werden,
- dass in einem zwischen dem Einlaufabschnitt (1e) und dem Auslaufabschnitt (1a) angeordneten Zwischenabschnitt (1z) des Korrugators (1) die Formstrecke (1f) zur Führung der Formbackenpaare ausgebildet ist und mindestens eine Rückführung (1r) ausgebildet ist, in der die Formbacken (5) vom Ende der Formstrecke (1f) zum Anfang der Formstrecke (1f) rückgeführt werden,
- dass die linken Formbacken in einem linken Formbackenumlauf endlos geführt sind und die rechten Formbacken in einem rechten Formbackenumlauf endlos geführt sind, wobei der linke Formbackenumlauf und der rechte Formbackenumlauf jeweils einen als Umlenkbereich ausgebildeten Einlaufabschnitt, vorzugsweise mit Umlenkritzeleinrichtung, einen linearen Formstreckenabschnitt und einen als Umlenkbereich ausgebildeten Auslaufabschnitt, vorzugsweise mit Umlenkritzeleinrichtung, und einen den Auslaufabschnitt und den Einlaufabschnitt verbindenden Rücklaufabschnitt aufweist,
- dass der Korrugator eine ortsfeste Führungseinrichtung zur Führung der Formbacken (5) aufweist, wobei die ortsfeste Führungseinrichtung durch jeweils eine ortsfeste Führungseinrichtung (6u) in den Umlenkbereichen und durch eine ortsfeste Führungseinrichtung (6z) in dem Zwischenabschnitt (1z) gebildet ist,
- dass jeder Formbacken (5) mindestens zwei Führungsstifte (5i) zum Eingriff in eine oder mehrere Führungsnuten der ortsfesten Führungseinrichtung und eine Zahnreiheneinrichtung (5z) aufweist,
- dass die mindestens zwei Führungsstifte auf der Oberseite und/oder der Unterseite des Formbackens (5) angeordnet sind und die Zahnreiheneinrichtung (5z) an einer Seitenfläche des Formbackens (5) zum Zusammenwirken mit einer Umlenkritzeleinrichtung in den Umlenkbereichen und/oder zum Zusammenwirken mit einer Ritzeleinrichtung im Zwischenabschnitt des Korrugators, vorzugsweise Formstrecke angeordnet ist,
- dass die mindestens zwei Führungsstifte einen ersten Führungsstift und einen zweiten Führungsstift umfassen,
- dass zwischen dem ersten Führungsstift und dem zweiten Führungsstift ein Abstand entlang der Erstreckung des Formbackens (5) in Produktionsrichtung ausgebildet ist, vorzugsweise zur Schwenkbewegung des Formbackens im Umlenkbereich,
- dass der erste Führungsstift und der zweite Führungsstift an derselben Seite des Formbackens (5) angeordnet sind oder an unterschiedlichen Seiten des Formbackens (5), vorzugsweise an gegenüberliegenden Seiten des Formbackens (5) angeordnet sind,
**dadurch gekennzeichnet,**
- **dass** die Zahnreiheneinrichtung (5z) als innenliegende Zahnreiheneinrichtung ausgebildet ist, die durch eine innenliegende Zahnreihe entlang der Produktionsrichtung erstreckend oder mehrere innenliegende Zahnreihen entlang der Produktionsrichtung erstreckend gebildet ist,
wobei vorzugsweise vorgesehen ist, dass die Zähne und/oder die Zahnlücken der Zahnreihe jeweils in die Seitenfläche eingreifend, vorzugsweise nicht über die Seitenfläche überstehend ausgebildet sind,
oder
- **dass** die Zahnreiheneinrichtung (5z) als aufliegende Zahnreiheneinrichtung ausgebildet ist, die durch eine aufliegende Zahnreihe entlang der Produktionsrichtung erstreckend oder mehrere aufliegende Zahnreihen entlang der Produktionsrichtung erstreckend gebildet ist,
wobei vorzugsweise vorgesehen ist, dass die Zähne und/oder Zahnlücken der Zahnreihe jeweils auf der Seitenfläche aufliegend und über die Seitenfläche überstehend ausgebildet sind.

5. Vorrichtung nach einem der vorangehenden Ansprüche,
**dadurch gekennzeichnet,**
**dass** die Zahnreiheneinrichtung, die nur durch die eine Zahnreihe oder die mehreren Zahnreihen gebildet ist, an der Seitenfläche des Formbacken bezüglich der Höhe der Seitenfläche unsymmetrisch ausgebildet ist,
a) vorzugsweise indem vorgesehen ist,
- **dass** die nur eine Zahnreihe nicht ausschließlich mittig, sondern zumindest abschnittsweise überwiegend in der oberen Hälfte oder überwiegend in der unteren Hälfte der Seitenfläche angeordnet ist, oder
- **dass** die Anzahl und/oder die Anordnung der Zahnreihen in der oberen Hälfte der Seitenfläche nicht identisch ist wie die Anzahl und/oder die Anordnung der Zahnreihen in der unteren Hälfte der Seitenfläche, oder
b) vorzugsweise indem vorgesehen ist,
- **dass** die nur eine Zahnreihe an der Seitenfläche mittig angeordnet ist, oder
- **dass** die Anzahl und die Anordnung der Zahnreihen in der oberen Hälfte der Seitenfläche identisch ist wie in der unteren Hälfte der Seitenfläche.

6. Vorrichtung nach einem der vorangehenden Ansprüche,
**dadurch gekennzeichnet,**
**dass** die Breite der Zahnreihe der Zahnreiheneinrichtung sich quer zur Produktionsrichtung mindestens über ein Drittel der Höhe des Formbackens, vorzugsweise über die Hälfte der Höhe des Formbackens, insbesondere über die gesamte Höhe des Formbackens, erstreckt.

7. Vorrichtung nach einem der vorangehenden Ansprüche,
**dadurch gekennzeichnet,**
a) **dass** die in dem Umlenkbereich angeordnete Umlenkritzeleinrichtungen jeweils ein einziges Umlenkritzel aufweisen, das mit der einen oder den mehreren Zahnreihen der Zahnreiheneinrichtung des Formbackens kämmt, vorzugsweise nur mit einem Teilabschnitt der Breite der Zahnreiheneinrichtung kämmt,
wobei die Breite der Verzahnung des Umlenkritzels der Breite der Zahnreihe der Zahnreiheneinrichtung entspricht, vorzugsweise identische Breite aufweist, oder wobei die Breite der Verzahnung des Umlenkritzels geringer ist, als die Breite der Zahnreihe der Zahnreiheneinrichtung und das Umlenkritzel nur mit einem Teilabschnitt der Breite der Zahnreiheneinrichtung kämmt,
oder
b) **dass** die Umlenkritzeleinrichtungen jeweils mehrere Umlenkritzel aufweisen, die auf einer gemeinsamen Drehwelle drehfest gelagert sind und mit dem einen oder den mehreren Zahnreihen der Zahnreiheneinrichtung des Formbackens kämmen, wobei vorzugsweise vorgesehen ist, dass ein Umlenkritzel jeweils nur mit einem Teilabschnitt der Breite der Zahnreiheneinrichtung kämmt.

8. Vorrichtung nach einem der vorangehenden Ansprüche
**dadurch gekennzeichnet,**
**dass** eine Spielausgleichsritzeleinrichtung (14) außerhalb des Umlenkbereichs, vorzugsweise in der Formstrecke und/oder in der Rückführung der Formbacken angeordnet ist, und mit der einen oder den mehreren Zahnreihen der Zahnreiheneinrichtung des Formbackens kämmt, vorzugsweise mit nur einem Teilabschnitt der Breite der Zahnritzeleinrichtung kämmt,
indem vorzugsweise vorgesehen ist,
**dass** die Spielausgleichsritzeleinrichtung (14) ein einziges Spielausgleichsritzel aufweist oder mehrere Spielausgleichsritzel, die auf einer gemeinsamen Drehwelle drehfest gelagert sind, aufweist, und das einzige Spielausgleichsritzel oder die mehreren Spielausgleichsritzel mit der gesamten Breite der Zahnreiheneinrichtung oder mit nur einem Teilabschnitt der Breite der Zahnreiheneinrichtung kämmt bzw. kämmen.

9. Vorrichtung nach einem der vorangehenden Ansprüche,
**dadurch gekennzeichnet,**
a) **dass** die mindestens zwei Führungsstifte
- als mit dem Formbacken bewegungsfeste und/oder starre Führungsstifte ausgebildet sind,
oder
- als relativ zu dem Formbacken drehbare Führungsstifte ausgebildet sind, und/oder
b) **dass** mindestens einer der Führungsstifte als mit dem Formbacken bewegungsfester und/oder starrer Führungsstift und mindestens ein anderer der Führungsstifte als relativ zu dem Formbacken drehbarer Führungsstift ausgebildet ist.

10. Vorrichtung nach einem der vorangehenden Ansprüche,
**dadurch gekennzeichnet,**
**dass** der erste Führungsstift und der zweite Führungsstift an der Oberseite des Formbackens angeordnet sind und vorzugsweise vorgesehen ist, dass an der Unterseite des Formbackens kein Führungsstift angeordnet ist oder weniger Führungsstifte als an der Oberseite angeordnet sind und die gesamte Fläche der Unterseite des Formbackens als durchgehende ebene Fläche ausgebildet ist, nur durchbrochen oder reduziert durch den an der Unterseite des Formbackens angeordneten Führungsstift oder die an der Unterseite des Formbackens angeordneten Führungsstifte.

11. Vorrichtung nach einem der vorangehenden Ansprüche,
**dadurch gekennzeichnet,**
**dass** die ortsfeste Führungseinrichtung in jedem Umlenkbereich mehrere Führungsnuten oder nur eine Führungsnut aufweist,
wobei die mehreren Führungssnuten als erste Führungsnut zum Eingriff des ersten Führungsstiftes und als zweite Führungsnut zum Eingriff des zweiten Führungsstiftes ausgebildet sind, oder die nur eine Führungsnut als gemeinsame Führungsnut zum Eingriff des ersten Führungsstiftes und des zweiten Führungsstiftes ausgebildet ist.

12. Vorrichtung nach einem der vorangehenden Ansprüche,
**dadurch gekennzeichnet,**
**dass** die ortsfeste Führungseinrichtung in den Zwischenabschnitt eine Führungs- und/oder Temperierkörpereinrichtung aufweist, die die passierenden Formbacken zumindest teilweise umgibt und Führungs- und/oder Temperierflächen zur Wärmeübertragung und/oder zur gleitenden Führung der Außenfläche der Formbacken aufweist,
wobei vorzugsweise vorgesehen ist,
**dass** die Führungs- und/oder Temperierkörpereinrichtung aus mehreren in Führungsrichtung axial hintereinander auf Stoß angeordneten Temperierkörpern ausgebildet ist und/oder aus mehreren quer zur Führungsrichtung nebeneinander angeordneten Temperierkörpern ausgebildet ist, wobei vorzugsweise vorgesehen ist, dass in dem Temperierkörper ein oder mehrere Temperiermittelkanäle ausgebildet sind, der bzw. die von dem Temperiermittel durchströmt ist bzw. sind.

13. Vorrichtung nach Anspruch 12,
**dadurch gekennzeichnet,**
**dass** die Führungs- und/oder Temperierkörpereinrichtung mehrere Führungsnuten aufweist, die die Führungsnuten zum Eingriff der Führungsstifte der Formbacken bilden, vorzugsweise als Aufnahmenut, die den oder die Führungsstifte mit Spiel aufnimmt,
wobei vorzugsweise vorgesehen ist, dass mindestens eine der Führungsnuten durch einen Zwischenraum zwischen den aneinander liegenden Führungs- und/oder Temperierkörper gebildet wird,
wobei vorzugsweise vorgesehen ist,
**dass** die ortsfeste Führungseinrichtung einen geschlossenen Umlauf zur Führung der Formbacken aufweist,
indem die Führungsnuten der Führungseinrichtungen in den Umlenkbereichen an die Führungsnuten und/oder Führungs- und Temperierflächen der Führungseinrichtung in dem Zwischenabschnitt anschließen,
wobei vorgesehen ist, dass die Führungsnuten im Zwischenabschnitt breiter als im Umlenkbereich ausgebildet sind, und/oder dass die Führungsnuten im Zwischenabschnitt als Aufnahmenuten ausgebildet sind, die den Führungsstift oder die Führungsstifte mit Spiel aufnehmen.

14. Vorrichtung nach einem der Ansprüche 12 bis 13,
**dadurch gekennzeichnet,**
**dass** in der Führungs- und/oder Temperierkörpereinrichtung (8) eine Spalteinrichtung ausgebildet ist zum Durchgriff von einem oder mehreren Zahnritzeln einer Zahnritzeleinrichtung für ein Kämmen mit der einen oder den mehreren Zahnreihen der an der Seitenfläche der Formbacken ausgebildeten Zahnreiheneinrichtung.

15. Vorrichtung nach einem der Ansprüche 12 bis 14,
**dadurch gekennzeichnet,**
**dass** die Führungs- und/oder Temperierkörpereinrichtung (8) von einer extern beaufschlagten Vakuumeinrichtung (15) durchgriffen ist, die an eine in den Formbacken ausgebildete Vakuumkanaleinrichtung (15k) anschließbar ist, indem an dem Formbacken eine mit der Vakuumkanaleinrichtung (15k) verbundene Vakuumanschlusseinrichtung (15a) ausgebildet ist, die mit der Vakuumeinrichtung (15, 15s), vorzugsweise über gleitende Anschlussverbindung verbindbar ist, wobei vorzugsweise vorgesehen ist, dass die Vakuumeinrichtung (15, 15s) die Führungs- und/oder Temperierkörpereinrichtung (8) von oben her durchgreift, und die Vakuumanschlusseinrichtung (15a) auf der Oberseite der Formbacken ausgebildet ist, oder dass die Vakuumeinrichtung (15, 15s) die Führungs- und/oder Temperierkörpereinrichtung (8) von unten her durchgreift, und die Vakuumanschlusseinrichtung (15a) auf der Unterseite der Formbacken ausgebildet ist,
wobei vorzugsweise vorgesehen ist,
(i) **dass** bei Anordnung der Vakuumanschlusseinrichtung (15a) auf der Oberseite der Formbacken die gesamte Unterseite des Formbackens als durchgehende ebene Fläche, vorzugsweise Lager- und/oder Lauffläche des Formbacken ausgebildet ist, gegebenenfalls nur durchbrochen oder reduziert durch den an der Unterseite des Formbackens angeordneten Führungsstift oder die an der Unterseite des Formbackens angeordneten Führungsstifte, oder
(ii) **dass** bei Anordnung der Vakuumanschlusseinrichtung (15a) an der Unterseite der Formbacken die gesamte Unterseite des Formbackens als durchgehende ebene Fläche, vorzugsweise als Lager- und/oder Lauffläche des Formbackens ausgebildet ist, gegebenenfalls nur durchbrochen oder reduziert durch die an der Unterseite der Formbacken angeordnete Vakuumanschlusseinrichtung (15a), und gegebenenfalls durchbrochen oder reduziert durch den an der Unterseite des Formbackens angeordneten Führungsstift, oder die an der Unterseite des Formbackens angeordneten Führungsstifte.
